(19) Europäisches Patentamt
European Patent Office
Office européen des brevets

(11) **EP 4 709 019 A1**

(12) **EUROPEAN PATENT APPLICATION**
published in accordance with Art. 153(4) EPC

(43) Date of publication:
**11.03.2026 Bulletin 2026/11**

(21) Application number: **24814113.7**

(22) Date of filing: **06.05.2024**

(51) International Patent Classification (IPC):
*H04W 74/08* (2024.01)

(52) Cooperative Patent Classification (CPC):
**G06K 19/077; H04W 74/00; H04W 74/08;**
**H04W 74/0833**

(86) International application number:
**PCT/CN2024/091252**

(87) International publication number:
**WO 2024/244908 (05.12.2024 Gazette 2024/49)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.05.2023 CN 202310613884**

(71) Applicant: **Huawei Technologies Co., Ltd.**
**Shenzhen, Guangdong 518129 (CN)**

(72) Inventors:
• **LI, Chenwan**
 **Shenzhen, Guangdong 518129 (CN)**
• **WU, Yiling**
 **Shenzhen, Guangdong 518129 (CN)**
• **CHEN, Lei**
 **Shenzhen, Guangdong 518129 (CN)**

(74) Representative: **Thun, Clemens**
**Mitscherlich PartmbB**
**Karlstraße 7**
**80333 München (DE)**

(54) **COMMUNICATION METHODS, AND APPARATUS**

(57) A communication method and apparatus are provided. The method includes: A second communication apparatus (for example, a reader) sends first signaling to indicate a quantity N of random access occasions, where N is a positive integer. In addition, the second communication apparatus further sends second signaling, where the second signaling includes first information, the first information indicates a number of a first random access occasion, and the number of the first random access occasion is less than or equal to N-1. A first communication apparatus (for example, a tag) receives the first signaling and the second signaling, and determines, based on the first information, whether to initiate random access on the first random access occasion. Based on this solution, the second communication apparatus indicates a number of a random access occasion, so that the first communication apparatus can determine whether the current random access occasion is a random access occasion of the first communication apparatus, and further initiate random access on the random access occasion of the first communication apparatus, to avoid initiating random access on another random access occasion, reduce a probability of an access conflict with another communication apparatus, and improve access efficiency.

FIG. 8

## Description

This application claims priority to Chinese Patent Application No. 202310613884.7, filed with the China National Intellectual Property Administration on May 26, 2023 and entitled "COMMUNICATION METHOD AND APPARATUS", which is incorporated herein by reference in its entirety.

## TECHNICAL FIELD

Embodiments of this application relate to the communication field, and in particular, to a communication method and apparatus.

## BACKGROUND

A radio frequency identification (radio frequency identification, RFID) technology is a non-contact automatic identification technology. An RFID system usually includes a reader (Reader) and a tag (Tag). The reader may send a continuous wave (continuous wave, CW) to provide energy or a carrier for the tag, and may further send signaling to page the tag, to indicate the tag to initiate an operation, for example, random access.

For example, the tag may select a random number as an initial value of a counter (counter) based on a Q value provided by the reader, and the counter is decreased by 1 each time the tag subsequently receives one piece of QueryRep signaling. When the counter is equal to 0, the tag initiates random access.

However, after coverage is enhanced, a tag in a poor coverage area may fail to receive one or some pieces of QuerpRep signaling, leading to inaccurate counting of the tag. Consequently, a large quantity of tags in a later random access occasion simultaneously initiate random access, and an access conflict occurs.

## SUMMARY

This application provides a communication method and apparatus, to reduce a probability of an access conflict and improve access efficiency.

According to a first aspect, a communication method is provided. The method may be performed by a first communication apparatus, may be performed by a component of a first communication apparatus, for example, a processor, a chip, a chip system, or the like of the first communication apparatus, or may be implemented by a logic module or software that can implement all or a part of functions of a first communication apparatus. The method includes: receiving first signaling, where the first signaling indicates a quantity N of random access occasions, and N is a positive integer; receiving second signaling, where the second signaling includes first information, the first information indicates a number of a first random access occasion, and the number of the first random access occasion is less than or equal to N-1; and determining, based on the first information, whether to initiate random access on the first random access occasion.

Based on this solution, the second communication apparatus includes information indicating a number of a random access occasion in signaling sent by the second communication apparatus, so that the first communication apparatus can determine a number of the current random access occasion, to determine whether the current random access occasion is a random access occasion of the first communication apparatus, and further initiate random access on the random access occasion of the first communication apparatus, thereby avoiding initiating random access on another random access occasion, reducing a probability of an access conflict with another communication apparatus, and improving access efficiency.

In a possible design, determining, based on the first information, whether to initiate random access on the first random access occasion includes: when the number of the first random access occasion is equal to a first value, determining to initiate random access on the first random access occasion; or when the number of the first random access occasion is not equal to a first value, determining not to initiate random access on the first random access occasion.

Based on this possible design, the first communication apparatus may determine, by comparing the number of the first random access occasion with the first value, whether to initiate random access on the first random access occasion. Compared with a manner of maintaining a counter, this manner can reduce implementation complexity, thereby reducing design complexity of the first communication apparatus.

According to a second aspect, a communication method is provided. The method may be performed by a second communication apparatus, may be performed by a component of a second communication apparatus, for example, a processor, a chip, a chip system, or the like of the second communication apparatus, or may be implemented by a logic module or software that can implement all or a part of functions of a second communication apparatus. The method includes: sending first signaling, where the first signaling indicates a quantity N of random access occasions, and N is a positive integer; and sending second signaling, where the second signaling includes first information, the first information indicates a number of a first random access occasion, and the number of the first random access occasion is less than or equal to N-1. For technical effect brought by the second aspect, refer to the technical effect brought by the first aspect. Details are not described herein again.

In a possible design, the first signaling further includes second information, the second information indicates a number of a second random access occasion, and the number of the second random access occasion is smaller than the number of the first random access occasion.

With reference to the first aspect or the second aspect, in a possible design, the first information is P-bit information, $2^P \geq N$, and P is a positive integer. Based on this possible design, the number of the first random access occasion may be directly indicated by using a value of the P-bit information, so that complexity of calculating the number of the random access occasion by the first communication apparatus is reduced.

With reference to the first aspect or the second aspect, in a possible design, the first information is M-bit information, $2^M < N$, and M is a positive integer.

With reference to the first aspect or the second aspect, in a possible design, a value of the M-bit information is greater than or equal to 0 and less than or equal to $2^M - 1$, the value of the M-bit information is an integer, and the number counter of the first random access occasion satisfies:

$$counter = (K - 1) \times 2^M + x + 1$$

K is a quantity of rounds, K is a positive integer, and x is the value of the M-bit information.

Based on the foregoing two possible designs, the number of the random access occasion is indicated by using the M-bit information, so that signaling overheads can be reduced.

With reference to the first aspect, in a possible design, when the value of the M-bit information is less than or equal to a second value, a value of K is equal to a third value plus 1; or when the value of the M-bit information is greater than a second value, a value of K is equal to a third value. The second value is a latest relative number before the second signaling is received, and the third value is a latest quantity of rounds before the second signaling is received.

Based on this possible design, the first communication apparatus may adjust a current quantity of rounds based on a latest relative number and a latest quantity of rounds that are maintained by the first communication apparatus, to improve accuracy of a number a random access occasion determined by the first communication apparatus, thereby improving accuracy of determining the random access occasion of the first communication apparatus, avoiding an access conflict with another communication apparatus caused by initiating random access on another random access occasion, and improving access efficiency.

According to a third aspect, a communication method is provided. The method may be performed by a first communication apparatus, may be performed by a component of a first communication apparatus, for example, a processor, a chip, a chip system, or the like of the first communication apparatus, or may be implemented by a logic module or software that can implement all or a part of functions of a first communication apparatus. The method includes: sending data to a second communication apparatus on a third random access occasion; receiving second information from the second communication apparatus, where the second information indicates a first communication apparatus not to toggle a state of a first inventoried flag bit, and the first inventoried flag bit is an inventoried flag bit of the second communication apparatus in a current round of inventory; and determining, based on the second information, not to toggle the state of the first inventoried flag bit.

Based on this solution, the second communication apparatus indicates the first communication apparatus not to toggle the inventoried flag bit in the current round of inventory. When the first communication apparatus fails to transmit data, the first communication apparatus can still have an occasion to initiate random access in a subsequent inventory cycle, to send data to the second communication apparatus, thereby avoiding omission of a part of first communication apparatuses, and improving communication efficiency.

According to a fourth aspect, a communication method is provided. The method may be performed by a second communication apparatus, may be performed by a component of a second communication apparatus, for example, a processor, a chip, a chip system, or the like of the second communication apparatus, or may be implemented by a logic module or software that can implement all or a part of functions of a second communication apparatus. The method includes: determining that data of a plurality of first communication apparatuses collides on a third random access occasion; and sending second information to the plurality of first communication apparatuses, where the second information indicates the first communication apparatus not to toggle a state of a first inventoried flag bit, and the first inventoried flag bit is an inventoried flag bit of a second communication apparatus in a current round of inventory.

Based on this solution, when determining that a data collision occurs on a random access occasion, the second communication apparatus may indicate a plurality of first communication apparatuses that collide not to toggle inventoried flag bits in a current round of inventory, so that the plurality of first communication apparatuses can still have occasions to initiate random access in a subsequent inventory cycle, to send data to the second communication apparatus, thereby avoiding omission of a part of first communication apparatuses, and improving communication efficiency.

In a possible design, determining that the data of the plurality of first communication apparatuses collides on the third random access occasion includes: not being capable of correctly decoding the data received on the third random access occasion.

With reference to the third aspect or the fourth aspect, in a possible design, that the second information indicates the first communication apparatus not to toggle the state of the first inventoried flag bit includes at least one of the following: the second information indicates that the first communication apparatus fails to transmit data; the second information indicates that the first communication apparatus fails to access; and the second information indicates that a collision occurs during data transmission of the first communication apparatus.

According to a fifth aspect, a communication method is provided. The method may be performed by a second communication apparatus, may be performed by a component of a second communication apparatus, for example, a processor, a chip, a chip system, or the like of the second communication apparatus, or may be implemented by a logic module or software that can implement all or a part of functions of a second communication apparatus. The method includes: sending first signaling, where the first signaling indicates a quantity N of random access occasions, and N is a positive integer; and sending L pieces of third signaling, where each piece of third signaling corresponds to one random access occasion, and L is a positive integer greater than N.

Based on this solution, the second communication apparatus sends the L pieces of third signaling, so that a quantity of actually triggered random access occasions is greater than the quantity N of random access occasions indicated by the first signaling, to provide a random access occasion for a first communication apparatus that fails to receive a part of the pieces of third signaling. Therefore, the first communication apparatus can initiate random access as much as possible, to improve random access efficiency.

In a possible design, a value of L is determined based on a channel bit error rate between a target first communication apparatus and a second communication apparatus.

In a possible design, the value of L satisfies the following relationship:

$$L = \lceil (1 + y) \times N \rceil$$

y indicates the channel bit error rate, and $\lceil\ \rceil$ indicates rounding up.

According to a sixth aspect, a communication apparatus is provided, configured to implement the foregoing methods. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects or the possible implementations of the foregoing aspects. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function according to any one of the foregoing aspects and the possible implementations of the foregoing aspects.

According to a seventh aspect, a communication apparatus is provided, and includes a processor and a communication interface. The communication interface is configured to communicate with a module outside the communication apparatus. The processor is configured to execute a computer program or instructions, to enable the communication apparatus to perform the method according to any one of the aspects.

According to an eighth aspect, a communication apparatus is provided, and includes at least one processor. The processor is configured to execute a computer program or instructions stored in a memory, to enable the communication apparatus to perform the method according to any one of the aspects. The memory may be coupled to the processor, or the memory may be independent of the processor. For example, the memory and the processor are two independent modules. The memory may be located outside the communication apparatus, or may be located inside the communication apparatus.

According to a ninth aspect, a computer-readable storage medium is provided. The computer-readable storage medium stores a computer program or instructions. When the computer program or the instructions are run on a communication apparatus, the communication apparatus is enabled to perform the method according to any one of the aspects.

According to a tenth aspect, a computer program product including instructions is provided. When the computer program product runs on a communication apparatus, the communication apparatus is enabled to perform the method according to any one of the aspects.

The communication apparatus provided in any one of the sixth aspect to the tenth aspect may be the first communication apparatus in the first aspect or the third aspect, or an apparatus included in the first communication apparatus, for example, a chip or a chip system; or the communication apparatus may be the second communication apparatus in the second aspect, the fourth aspect, or the fifth aspect, or an apparatus included in the second communication apparatus, for example, a chip or a chip system. When the apparatus is a chip system, the apparatus may include a chip, or may include a chip and another discrete device.

It may be understood that when the communication apparatus provided in any one of the sixth aspect to the tenth aspect is a chip, a sending action/function of the communication apparatus may be understood as outputting information, and a receiving action/function of the communication apparatus may be understood as inputting information.

For technical effect brought by any one of the designs of the sixth aspect to the tenth aspect, refer to technical effect brought by different designs of the first aspect to the fifth aspect. Details are not described herein again.

According to an eleventh aspect, a communication system is provided. The communication system includes the first communication apparatus according to the foregoing aspects and the second communication apparatus according to the foregoing aspects.

## BRIEF DESCRIPTION OF DRAWINGS

FIG. 1 is a diagram of a working principle of an RFID system according to this application;
FIG. 2 is a diagram of a communication link between a reader and a tag in a distributed architecture according to this application;
FIG. 3 is a schematic flowchart of random access according to this application;
FIG. 4 is a diagram of a scenario of an access conflict according to this application;
FIG. 5 is a diagram of a structure of a communication system according to this application;
FIG. 6 is a diagram of a structure of another communication system according to this application;
FIG. 7 is a diagram of a structure of still another communication system according to this application;
FIG. 8 is a schematic flowchart of a communication method according to this application;
FIG. 9 is a diagram of a random access occasion according to this application;
FIG. 10 is a diagram of signaling according to this application;
FIG. 11 is a diagram of indicating a number of a random access occasion according to this application;
FIG. 12 is a diagram of a scenario of a data conflict according to this application;
FIG. 13 is a schematic flowchart of another communication method according to this application;
FIG. 14 is a schematic flowchart of still another communication method according to this application;
FIG. 15 is a diagram of a random access occasion according to this application;
FIG. 16 is a diagram of a structure of a communication apparatus according to this application;
FIG. 17 is a diagram of a structure of another communication apparatus according to this application; and
FIG. 18 is a diagram of a structure of still another communication apparatus according to this application.

## DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to embodiments are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of different embodiments. In embodiments of this application, unless otherwise specified or a logical conflict occurs, terms and/or descriptions in different embodiments are consistent and may be referenced by each other, and different embodiments may be combined based on internal logical relationships between embodiments to form a new embodiment. The following implementations of this application are not intended to limit the protection scope of this application.

A radio frequency identification (radio frequency identification, RFID) technology is a non-contact automatic identification technology. RFID system communication includes a reader (Reader) and a tag (Tag). The tag may also be referred to as an RFID tag or an RFID terminal.

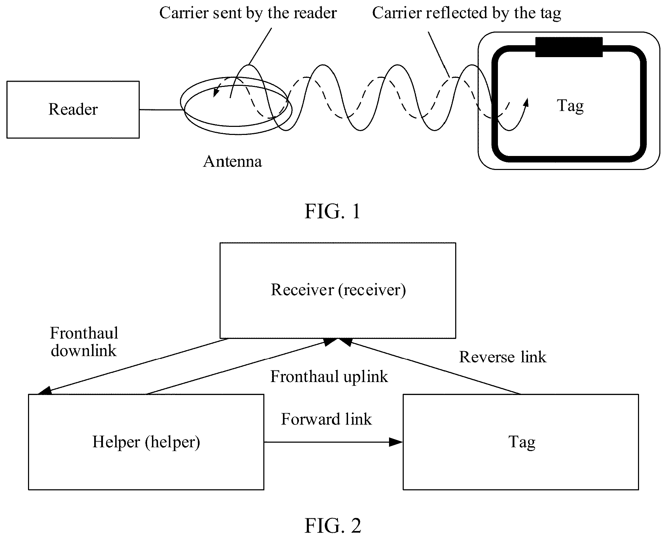

Tags can be classified into a passive tag (passive tag), a semi-passive tag (semi-passive tag), and an active tag (active tag). For the passive tag, working energy of the passive tag is provided by the reader. For example, a part of energy of a continuous wave (continuous wave, CW) sent by the reader is used for internal processing, for example, encoding/decoding and modulation/demodulation of the tag. In addition, the continuous wave is further used as a carrier to carry uplink information of the tag, that is, when the tag works, a working capability and the carrier of the tag are provided by the reader. A battery may be included inside the semi-passive tag. Internal processing, for example, encoding/decoding and modulation/demodulation, may be powered by the battery, but a continuous wave of the reader still needs to be used as a carrier. In other words, for the passive tag and the semi-passive tag, communication is performed based on a backscatter (backscatter) carrier. For example, as shown in FIG. 1, after the reader sends a carrier, the tag performs modulation and backscatter transmission based on the carrier sent by the reader. The active tag has a capability of actively generating a carrier.

The reader is a device having a read/write function, and may be, for example, a device for reading or writing tag information. Alternatively, the reader may be understood as a device communicating with the tag. For example, in a separated architecture, as shown in FIG. 2, the reader may include a helper (helper) and a receiver (receiver). A link from the helper to the tag may be referred to as a forward link or a downlink, a link from the tag to the receiver may be referred to as a reverse link or an uplink, a link from the receiver to the helper may be referred to as a fronthaul downlink, and a link from the helper to the receiver may be referred to as a fronthaul uplink. The receiver and the helper may perform transmission through an air interface, or may perform transmission through a wired connection.

For example, the helper is mainly configured to send the continuous wave to the tag on the forward link, and a signal sent by the tag is received by the receiver on the reverse link. In addition, the receiver may generate RFID signaling, and send the RFID signaling to the helper through the fronthaul downlink, and then the helper forwards the RFID signaling to the tag through the forward link.

In the RFID technology, the reader may perform operations such as select (select), inventory (inventory), and access (access) on the tag. The select operation is used to select one tag or a group of tags for inventory and access. The inventory operation may be understood as a process in which the reader identifies the tag. The access operation may be understood as a process in which the reader interacts with the tag. The tag needs to be identified by the reader and then accessed.

With diversification of communication requirements and development of communication technologies, use of the RFID technology in a cellular network becomes an important research direction. In this scenario, the select operation performed by the reader on the tag may be understood as a paging operation. The inventory operation performed by the reader on the tag may be understood as a random access process. The access operation performed by the reader on the tag may be understood as a data transmission process or the like.

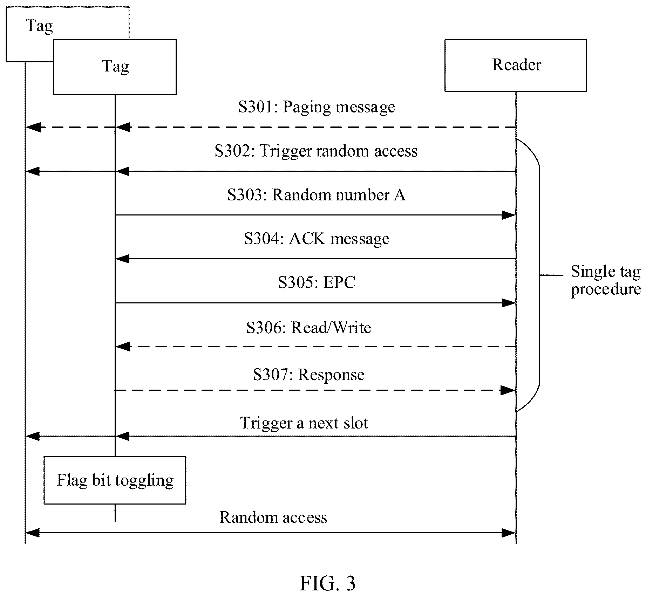

For example, a procedure in which the reader performs select (paging), inventory (random access), and access (data transmission) on the tag may be shown in FIG. 3. As shown in FIG. 3, the procedure includes the following steps.

S301: A reader sends a paging message. The paging message is used to select one tag or a group of tags.

Optionally, the paging message may include a select (select) command. For example, the select command may include memory information, and a tag whose data stored in a storage area indicated by the memory information is consistent with a mask value is a tag selected by using the select command (or the paging message). The mask value may be indicated in the select command.

For example, the select command may include the following fields: a command field, a target field, an action field, a MemBank field, a pointer field, a length field, a mask field, a truncate field, and a cyclic redundancy check (cyclic redundancy check, CRC) field.

When a value of the command field is 1010, it indicates that a command is the select command.

The target field indicates whether the select command is used to change a state of a select flag (select flag, SL) bit or a state of an inventoried (Inventoried) flag bit.

The inventoried flag bit has four types (or referred to as sessions (session)), and each type corresponds to two states: a state A and a state B. A state of an inventoried flag bit of a tag that has been currently inventoried is toggled, so that a same tag can be prevented from being identified for a plurality of times in one round of inventory process. An SL includes two states: a declared state and an undeclared state.

The action field indicates a change strategy of the state of the SL or the state of the inventoried flag bit. A tag paged by the reader may change the state of the SL or the state of the inventoried flag bit according to the strategy.

The MemBank field, the pointer field, and the length field jointly indicate the foregoing memory information.

The mask field indicates the mask value.

The truncate field indicates the tag to return a part or all of an electronic product code (electronic product code, EPC).

The CRC field is used to carry CRC.

It should be noted that step S301 is an optional step, that is, step S301 may not be performed.

S302: The reader triggers random access (random access, RA).

Optionally, the reader may send a Query command to trigger random access. The Query command may indicate a type of inventoried flag bit (that is, Sx, where x may be 0, 1, 2, or 3) and a state X (where X may be A or B) of the inventoried flag bit, to indicate that the reader selects a tag whose state of the inventoried flag bit Sx is X for access. In addition, the Query command may further indicate a parameter Q, where the parameter Q may indicate a maximum access slot range.

Optionally, the slot may be a period of continuous duration triggered (or activated) by using a Query/QueryRep command. Duration of a slot is determined by a Query/QueryRep command that is used to trigger the slot and a next Query/QueryRep command after the command. The tag may initiate random access in the slot. Further, data transmission may be further performed in the slot.

For a plurality of tags selected by the reader, inventory and access are performed in a time division multiplexing manner. To be specific, after completing performing inventory and access on a tag, the reader starts to perform inventory and access on a next tag. The following steps are described by using inventory and the access on one tag as an example.

S303: The tag sends a random number (random number, RN) A. For example, the random number A may be a 16-bit random number (RN16).

If a tag matches selection of the reader, or is a tag selected by the reader, and a state of an inventoried flag bit Sx of the tag is consistent with the state of the inventoried flag bit Sx indicated by the Query command, after receiving the Query command, the tag may select a value within a range $[0, 2^Q - 1]$ based on the parameter Q indicated by the Query command as an initial value of a counter. The initial value of the counter may be understood as a number of a slot selected by the tag. After the Query command triggers the slot, the counter is decreased by 1 each time the tag receives a QueryRep command. When the counter is decreased to 0, the tag sends the random number A.

Optionally, the random number A may be carried in a message A for sending, and the message A may be similar to or understood as a message 3 (Msg3) in a random access process in a cellular network.

It should be noted that a slot 0 may be triggered after the reader sends the Query command in step S302. Therefore, when a tag selects 0 within a range $[0, 2^Q - 1]$ as an initial value of a counter, the tag may perform step S303 after receiving a Query command.

S304: If successfully receiving the random number A, the reader sends an acknowledgment (acknowledgment, ACK) message. The message includes the random number A.

Optionally, the ACK message may be similar to or understood as a message 4 (Msg4) in a random access process in a cellular network, or the ACK message may be understood as a random access response message or a contention resolution message.

After receiving, within specified time, the acknowledgment message that carries the random number A sent by the tag, the tag may perform the following step S305.

S305: The tag sends an electronic product code (electronic product code, EPC).

S306 and S307: After step S305, the reader optionally sends an instruction to the tag, performs an operation such as reading or writing on the tag, and interacts with the tag. After receiving the instruction, the tag may respond to the instruction.

After completing performing inventory and access on the current tag, the reader may send a QueryRep command to start to perform inventory and access on a next tag. After receiving the QueryRep command, the current tag needs to toggle the state of the inventoried flag bit Sx of the current tag. For example, when X is B, the current tag toggles the state of the inventoried flag bit Sx from B to A, to avoid repeated inventory. After another tag receives the QueryRep command, if the counter is decreased to 0, the foregoing steps S303 to S307 are performed.

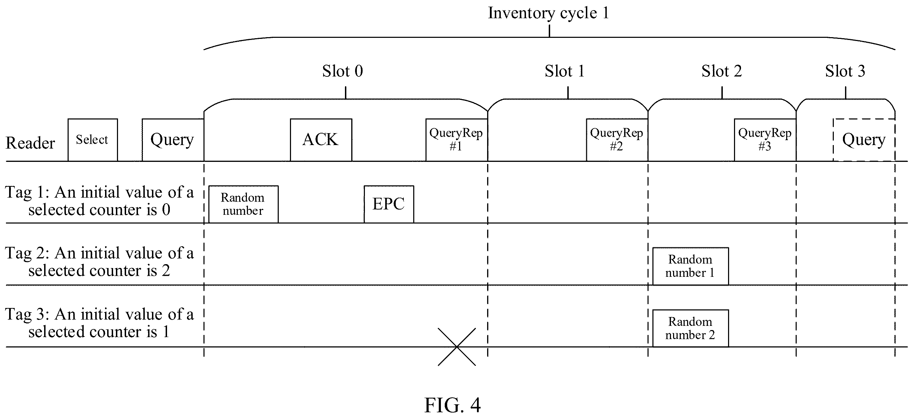

For example, the reader selects three tags (a tag 1, a tag 2, and a tag 3) according to the select command, and indicates that a quantity of slots is 4 according to the Query command, that is, Q is equal to 2. As shown in FIG. 4, the Query command sent by the reader is used to trigger a slot 0, a QueryRep #1 is used to trigger a slot 1, a Query #2 is used to trigger a slot 2, and a Query #3 is used to trigger a slot 3. It is assumed that an initial value of a counter selected by the tag 1 is 0. In this case, the tag 1 may perform the foregoing steps S303 to S305 after receiving the Query command (that is, in the slot 0). It is assumed that an initial value of a counter selected by the tag 2 is 2. In this case, after the tag 2 receives the QueryRep #1, the value of the counter is decreased to 1. After the QueryRep #2 is received, the value of the counter is decreased to 0. Therefore, the tag 2 perform access in the slot 2.

As machine type communication (machine type communication, MTC) and internet of things (internet of things, IoT) communication are widely applied, a quantity of connections of IoT devices in a network increases day by day. Therefore, the industry has increasingly strong demands for reducing costs and power consumption of the IoT devices.

In a 4th generation (4th generation, 4G) era, the 3rd generation partnership project (3rd generation partnership project, 3GPP) introduces a narrowband (narrowband IoT, NB-IoT) system. In the NB-IoT system, an NB-IoT terminal needs external power supply (for example, a battery), has a capability of generating a local high-frequency local oscillator carrier, and therefore has power consumption at a microwatt level. With evolution and development of the 5th generation (5th generation, 5G) IoT, there is an increasing demand for terminals supporting lower power consumption in a 5G network. The RFID technology provides a good technical reference for low power consumption.

For example, a capability and a carrier of an RFID tag when working are from the reader, so that the RFID tag can use a low-precision medium-to-low frequency ring oscillator with low power consumption to receive a downlink signal or receive a downlink signal without a local oscillator, thereby achieving power consumption at a microwatt level. 5G ambient (Ambient) IoT emerges because of advantages of an RFID technology in low power consumption. To meet an ultra-low power consumption requirement, a terminal in the ambient IoT is similar to the RFID terminal, and also uses a low-precision medium-to-low frequency ring oscillator with low power consumption to receive a downlink signal or receives a downlink signal without a local oscillator, to reduce power consumption of the terminal.

However, costs and design complexity of the RFID terminal are low, resulting in poor coverage. During research of the 5G ambient IoT, coverage is enhanced, for example, to increase a network coverage area. In this case, if an access procedure in the RFID technology continues to be used, an access conflict may occur.

For example, after coverage is enhanced, a part of tags (for example, a tag located in a coverage edge area) may not correctly receive each piece of QueryRep signaling, so that the QueryRep signaling may be missed to be received, leading to inaccurate counting of the counter. That is, a slot in which the counter is actually decreased to 0 is later than a slot in which the counter is decreased to 0 when receiving is normally performed. In other words, the tag initiates random access in a later slot. In this case, if a tag that originally selects the later slot can normally receive QueryRep signaling, an access conflict occurs between a tag that does not normally receive the QueryRep signaling and the tag that normally receives the QueryRep signaling in the later slot, resulting in low access efficiency.

For example, based on the example shown in FIG. 4, an example in which the initial value of the counter selected by the tag 2 is 2, and the initial value of the counter selected by the tag 3 is 1 is used. It is assumed that the tag 3 fails to receive the QueryRep #1, and successfully receives the QueryRep #2. In this case, the counter is decreased to 0 after the tag 3 receives the QueryRep #2, and the tag 3 initiates random access in the slot 2. It is assumed that the tag 2 successfully receives the QueryRep #1 and the QueryRep #2. In this case, the counter is decreased to 0 after the tag 2 receives the QueryRep #2, and the tag 2 also initiates random access in the slot 2. In this case, if a random number sent by the tag 2 and a random number sent by the tag 3 during random access are inconsistent, an access collision occurs between the tag 2 and the tag 3 in the slot 2. In addition, even if the random number sent by the tag 2 and the random number sent by the tag 3 during random access are consistent, data sent by the tag 2 and data sent by the tag 3 may also collide during subsequent data transmission, causing a data transmission failure.

Based on this, this application provides a communication method. A reader may indicate a number of a random access occasion in signaling, so that a tag may determine, based on the number of the random access occasion, whether the current random access occasion is a random access occasion selected by the tag, thereby accurately initiating random access on the random access occasion selected by the tag, reducing a probability of an access conflict with another tag, and improving access efficiency.

The technical solutions provided in this application may be applied to various communication systems. The communication system may be a 3GPP communication system, for example, a 4G long term evolution (long term evolution, LTE) system, a 5G new radio (new radio, NR) system, a vehicle to everything (vehicle to everything, V2X) system, an LTE and NR hybrid networking system, a device-to-device (device-to-device, D2D) system, a machine-to-machine (machine to machine, M2M) communication system, an internet of things (Internet of Things, IoT) system, a passive IoT (passive IoT, PIoT) system, and another next-generation communication system such as a 6th generation (6th generation, 6G) mobile communication system. Alternatively, the communication system may be a non-3GPP communication system, for example, a wireless local area network (wireless local area network, WLAN). This is not limited.

The foregoing communication systems applicable to this application are merely examples for description, and communication systems applicable to this application are not limited thereto. This is uniformly described herein. Details are not described below again.

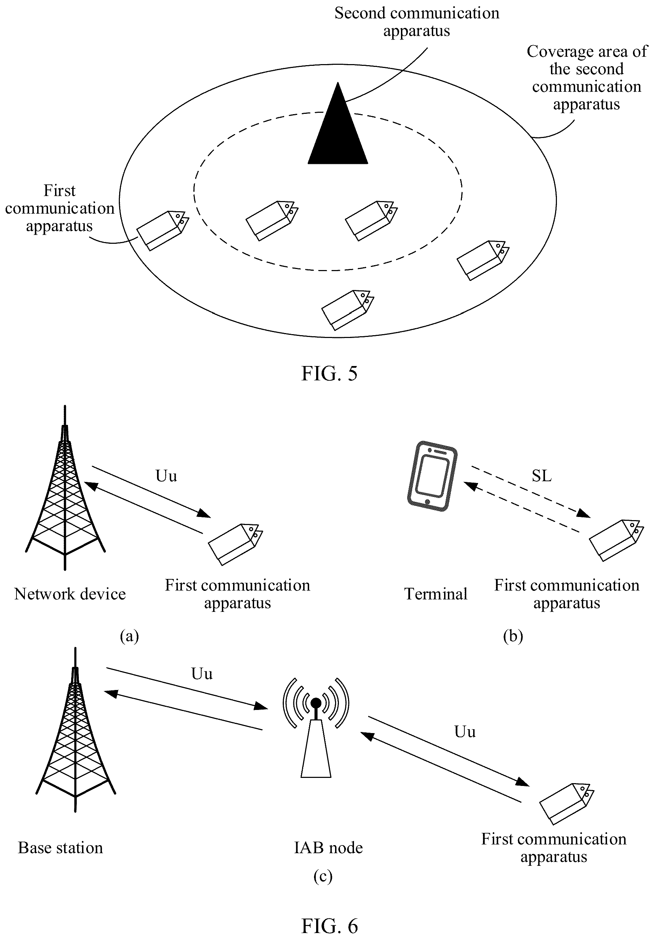

FIG. 5 shows an example of a communication system according to an embodiment of this application. The communication system includes at least one first communication apparatus and a second communication apparatus.

Optionally, the first communication apparatus may be located in a coverage area provided by the second communication apparatus. Different first communication apparatuses may be located at different locations in the coverage area provided by the second communication apparatus. There may be a downlink data connection between the first communication apparatus and the second communication apparatus, or there may be an uplink data connection and a downlink data connection between the first communication apparatus and the second communication apparatus. The downlink refers to a transmission direction from the second communication apparatus to the first communication apparatus, and the uplink refers to a transmission direction from the first communication apparatus to the second communication apparatus.

Optionally, the first communication apparatus is a low power consumption terminal, for example, a terminal that uses a low-precision medium-to-low frequency ring oscillator with low power consumption to receive a downlink signal or receives a downlink signal without a local oscillator. The first communication apparatus may be used as a tag, or the first communication apparatus may be an apparatus including a tag, or the first communication apparatus may implement a function of a tag. For example, the first communication apparatus may be in a form of a terminal or another form. This is not limited. The first communication apparatus may also be referred to as a terminal, an IoT terminal, an ambient IoT terminal, or the like. Certainly, the first communication apparatus may also have another name. This is not specifically limited in this application.

Optionally, the second communication apparatus may be used as a reader, or the second communication apparatus may be an apparatus including a reader, or the second communication apparatus may implement a part or all of functions of a reader. For example, the second communication apparatus may be in a form of a network device, a terminal, a relay node, an integrated access and backhaul (integrated access and backhaul, IAB) node, an amplifier, or the like. This is not limited.

Optionally, the terminal is a device having a wireless transceiver function, and may also be referred to as user equipment (user equipment, UE), a terminal device, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be deployed on land, including an indoor device, an outdoor device, a handheld device, or a vehicle-mounted device; or may be deployed on water (for example, on a ship); or may be deployed in the air (for example, on a plane, a balloon, or a satellite).

For example, the terminal device may be, for example, a wireless terminal in IoT, V2X, D2D, M2M, a 5G network, or a future evolved public land mobile network (public land mobile network, PLMN). For example, the terminal device may be an uncrewed aerial vehicle, an IoT device (for example, a sensor, an electricity meter, or a water meter), a V2X device, a station (station, STA) in a WLAN, a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, or an uncrewed aerial vehicle having an uncrewed aerial vehicle to uncrewed aerial vehicle (UAV to UAV, U2U) communication capability. The terminal may be mobile or fixed. This is not specifically limited in this application.

Optionally, the network device is a device for connecting a terminal to a wireless network, and may be an evolved NodeB (evolved NodeB, eNB or eNodeB) in an LTE or evolved LTE (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a broadband network service gateway (broadband network gateway, BNG), an aggregation switch, or a non-3GPP access device; or may be a radio controller in a cloud radio access network (cloud radio access network, CRAN); or may be an access node (access point, AP) in a Wi-Fi system; or may be a wireless relay node or a wireless backhaul node; or may be a device that implements a base station function in IoT, V2X, D2D, or M2M. This is not specifically limited in embodiments of this application. For example, the base station in embodiments of this application may include base stations in various forms, for example, a macro base station, a micro base station (also referred to as a small cell), a relay station, and an access point. This is not specifically limited in embodiments of this application.

In a network structure, the network device may alternatively be a module or unit that can implement a part or all of functions of the base station. For example, the network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device in an open radio access network (open RAN, ORAN) system or a module of the network device. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP and the CU-UP), the DU, and the RU in this application may be implemented by a software module, a hardware module, or a combination of a software module and a hardware module.

Optionally, as shown in (a) in FIG. 6, the second communication apparatus may be in a form of a network device, and communication between the first communication apparatus and the second communication apparatus is Uu interface communication, that is, air interface communication. Alternatively, as shown in (b) in FIG. 6, the second communication apparatus may be in a form of a terminal, communication between the first communication apparatus and the second communication apparatus may be considered as communication between terminals, and the first communication apparatus and the second communication apparatus may communicate through a sidelink (sidelink, SL). Alternatively, as shown in (c) in FIG. 6, the second communication apparatus may be in a form of an IAB node or a relay node. The first communication apparatus is connected to the IAB node through a Uu interface, and the IAB node is connected to a base station through the Uu interface.

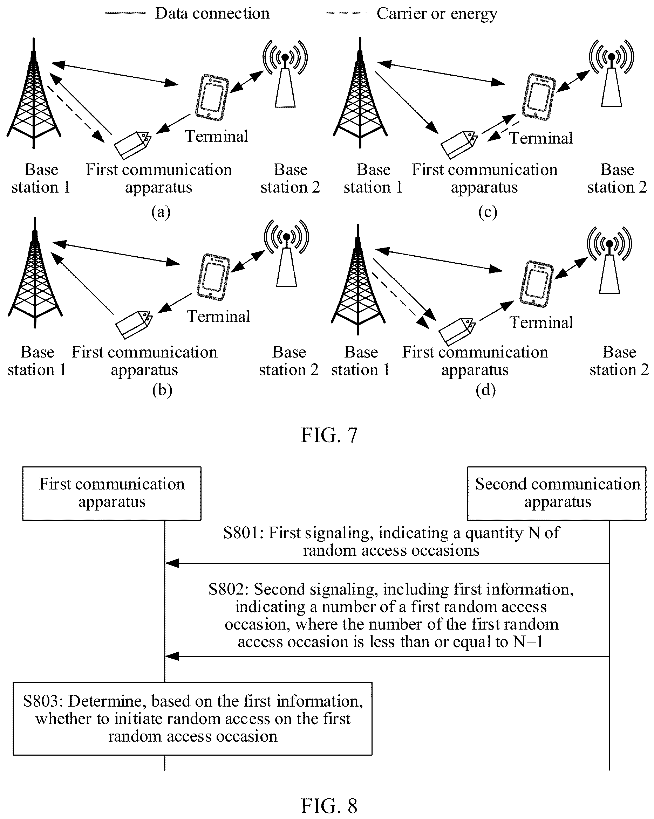

Optionally, in a separated architecture, there is a downlink data connection between the second communication apparatus and the first communication apparatus. As shown in (a) and (b) in FIG. 7, the second communication apparatus may be in a form of a terminal. As shown in (c) and (d) in FIG. 7, the second communication apparatus may be in a form of a base station.

As shown in (a) and (b) in FIG. 7, there is a downlink data connection between the first communication apparatus and the terminal (that is, the second communication apparatus), and there is an uplink data connection between the first communication apparatus and a base station 1. The terminal communicates with the base station 1 and a base station 2 through a Uu interface. In an architecture in (a) in FIG. 7, the base station 1 provides a carrier or energy for the first communication apparatus. In an architecture in (b) in FIG. 7, the terminal provides a carrier or energy for the first communication apparatus.

As shown in (c) and (d) in FIG. 7, there is a downlink data connection between the first communication apparatus and the base station 1 (that is, the second communication apparatus), and there is an uplink data connection between the first communication apparatus and the terminal. The terminal communicates with the base station 1 and a base station 2 through a Uu interface. In an architecture in (c) in FIG. 7, the terminal provides a carrier or energy for the first communication apparatus. In an architecture in (d) in FIG. 7, the base station 1 provides a carrier or energy for the first communication apparatus.

With reference to the accompanying drawings, the following describes in detail the method provided in embodiments of this application by using interaction between the first communication apparatus and the second communication apparatus shown in FIG. 5 as an example.

It may be understood that, in embodiments in this application, an execution body may perform a part or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

It should be noted that, in the following embodiments of this application, names of messages or names of parameters in messages of devices are merely examples, and the messages or the parameters may have other names in specific implementations. This is not specifically limited in embodiments of this application.

For example, the method provided in the following embodiments of this application may be applied to a scenario in which an RFID technology is applied to a mobile communication system, or may be applied to a scenario in which a coverage area of a reader is large, or may be applied to a scenario in which a low power consumption terminal is introduced to a mobile communication system. Certainly, an application scenario of this application is merely described herein as an example. The application scenario does not constitute any limitation on this application, and an application scenario of the method provided below is not specifically limited in this application either.

FIG. 8 shows a communication method according to an embodiment of this application. The communication method includes the following steps.

S801: A second communication apparatus sends first signaling. Correspondingly, the first communication apparatus receives the first signaling from the second communication apparatus.

Optionally, after the second communication apparatus sends the first signaling, at least one first communication apparatus in a coverage area provided by the second communication apparatus may receive the first signaling. In this application, any first communication apparatus in the coverage area provided by the second communication apparatus is used as an example for description.

The first signaling indicates a quantity N of random access occasions (RA occasions, ROs), and N is a positive integer. For example, N may also be understood as a maximum quantity of random access occasions.

Optionally, the random access occasion may be a time unit of a fixed length. Alternatively, the random access occasion may be continuous duration of a variable length, that is, the random access occasion is not a time unit of a fixed length. The first communication apparatus may initiate random access on the random access occasion. For example, after the first communication apparatus successfully performs access on the random access occasion, it may be considered that a communication connection, for example, a radio resource control (radio resource control, RRC) connection, is established between the first communication apparatus and the second communication apparatus.

Further, the first communication apparatus and the second communication apparatus may further perform data transmission on the random access occasion. In addition, the random access occasion may also be referred to as a random access opportunity, a slot (slot), an access slot, or a random access slot. Certainly, the random access occasion may have another name. This is not specifically limited in this application.

Optionally, duration of different random access occasions may be the same or may be different. The quantity N of random access occasions indicated by the first signaling is used to indicate a quantity of random access occasions. The random access occasion may be triggered, activated, or indicated by using specific signaling sent by the second communication apparatus. The second communication apparatus may send N pieces of specific signaling, and each piece of specific signaling is used to trigger one random access occasion, that is, N pieces of specific signaling are sent to trigger N random access occasions. A start moment of a random access occasion and duration of the random access occasion may be determined by the specific signaling. A start of a next random access occasion may also be understood as an end of a previous random access occasion, or may be understood as an end of a transmission procedure performed in a previous random access occasion. A latter piece of specific signaling in consecutive two pieces of specific signaling may be used to release a previous random access occasion, or used to release a communication connection established on a previous random access occasion, and latter specific information may be further used to trigger a next random access occasion. The previous random access occasion is a random access occasion triggered by using a former piece of specific signaling in the consecutive two pieces of specific signaling.

For example, the specific signaling may be first signaling or second signaling. The first signaling and the second signaling may be a Query command, or a QueryRep command, or signaling that can implement a function of a Query/QueryRep command, or other signaling that can be used to trigger a random access occasion; or the first signaling and the second signaling may be RRC signaling or media access control (media access control, MAC) signaling. When the first signaling or the second signaling is RRC signaling, the first signaling or the second signaling may also be referred to as an RRC connection release message, an RRC time interval message, or the like.

For example, a start moment of a random access occasion triggered by using a piece of specific signaling may be an end moment of the piece of specific signaling. An end moment of triggering by using a piece of specific signaling may be an end moment of a next piece of specific signaling of the piece of specific signaling.

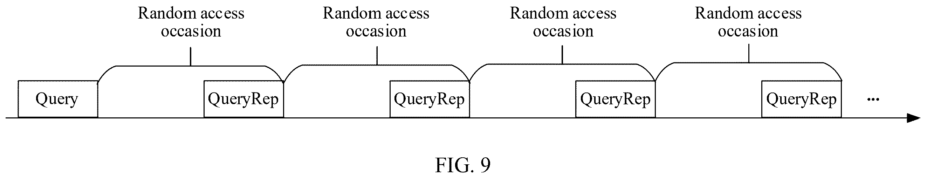

For example, the piece of specific signaling is a Query command or a QueryRep command. As shown in FIG. 9, a start moment of a random access occasion triggered by using the piece of specific signaling is an end moment of the piece of specific signaling, and an end moment of the random access occasion is an end moment of a next piece of specific signaling.

Optionally, that the piece of specific signaling is used to trigger the random access occasion may also be understood as that the piece of specific signaling is used to trigger RRC connection establishment. Alternatively, in addition to triggering the random access occasion, the piece of specific signaling may be further used to trigger RRC connection establishment. The RRC connection establishment may be performed on the random access occasion. Random access in embodiments of this application may also be understood or replaced with RRC connection establishment.

Optionally, the first signaling may include a first field, and the first field includes at least one bit. A value of the first field may indicate a quantity N of random access occasions. For example, $N=2^Y$, and Y is a quantity of bits included in the first field.

Optionally, the first signaling is further used to trigger a random access occasion, that is, the first signaling may be the foregoing piece of specific signaling that can be used to trigger the random access occasion. The first signaling may be a 1st piece of specific signaling in the N pieces of specific signaling, and the random access occasion triggered by using the first signaling may be a 1st random access occasion in the N random access occasions. In this scenario, remaining N-1 random access occasions may be triggered by using N-1 pieces of second signaling.

Alternatively, the first signaling is not used to trigger the random access occasion, that is, the first signaling is not the specific signaling that can be used to trigger the random access occasion. In this scenario, the N random access occasions are triggered by using N pieces of second signaling. Unless otherwise specified, the following embodiments of this application are described by using an example in which the first signaling can be used to trigger the random access occasion, that is, the first signaling is the specific signaling.

Optionally, the first signaling may further indicate a first inventoried flag bit and a first state of the first inventoried flag bit, and is used to trigger a first communication apparatus whose state of the first inventoried flag bit state is the first state to perform access. The first inventoried flag bit may also be understood as an inventoried flag bit of the second communication apparatus in a current round of inventory.

Optionally, the second communication apparatus may further send signaling A to select at least one first communication apparatus. For example, the second communication apparatus may send the signaling A after receiving a paging instruction or an inventory instruction from a core network. Implementation of the signaling A may be the same as or similar to the implementation of the select command or the paging message. For details, refer to the related description of the select command. Details are not described herein again.

Optionally, content included in the signaling A and content included in the first signaling may be carried in one message for sending, or may be carried in two messages for sending. When the content included in the signaling A and the content included in the first signaling are carried in the two messages, the second communication apparatus may first send the signaling A and then send the first signaling.

Optionally, the second communication apparatus may not send signaling A. In this case, the first signaling may be used to select at least one first communication apparatus, and is used to trigger the first communication apparatus whose state of the first inventoried flag bit state is the first state to perform access.

Optionally, implementation of the first signaling may be the same as or similar to the implementation of the Query command or the QueryRep command. For details, refer to the related description of the Query command or the QueryRep command. Details are not described herein again. The first signaling may also be referred to as Query signaling or QueryRep signaling. A name of the first signaling is not specifically limited in this application. Alternatively, implementation of the first signaling may be the same as or similar to the implementation of the RRC signaling or the MAC signaling.

S802: The second communication apparatus sends the second signaling. Correspondingly, the first communication apparatus receives the second signaling from the second communication apparatus.

The second signaling includes first information, and the first information indicates a number of a first random access occasion. The number of the first random access occasion is less than or equal to N-1; or the number of the first random access occasion is less than or equal to N.

For example, when a number of a 1st random access occasion in the N random access occasions is 0, that is, numbers of the N random access occasions are respectively 0 to N-1, the number of the first random access occasion is less than or equal to N-1. When a number of a 1st random access occasion in the N random access occasions is 1, that is, numbers of the N random access occasions are respectively 1 to N, the number of the first random access occasion is less than or equal to N. In the following embodiments of this application, an example in which the numbers of the N random access occasions are respectively 0 to N-1 is used for description. The numbering manner may be properly transformed (for example, a number, counting, a value range, and a value in the following embodiments are adjusted) to be applicable to a case in which the numbers of the N random access occasions are respectively 1 to N.

Optionally, if the first signaling is not used to trigger the random access occasion, that is, the first signaling is not the specific signaling that can be used to trigger the random access occasion, when the numbers of the N random access occasions are respectively 0 to N-1, a range of the number of the first random access occasion may be [0, N-1]; or when the numbers of the N random access occasions are respectively 1 to N, a range of the number of the first random access occasion may be [1, N].

If the first signaling is used to trigger the random access occasion, that is, the first signaling is the specific signaling that can be used to trigger the random access occasion, when the numbers of the N random access occasions are respectively 0 to N-1, a range of the number of the first random access occasion may be [1, N-1]; or when the numbers of the N random access occasions are respectively 1 to N, a range of the number of the first random access occasion may be [2, N].

Optionally, the number of the 1st random access occasion in the N random access occasions may also be X, where X is a positive integer greater than 1. In this case, the numbers of the N random access occasions are respectively X to X+N-1. The solutions in the following embodiments of this application may also be properly transformed (for example, a number, counting, a value range, and a value in the following embodiments are adjusted) to be applicable to a case in which the numbers of N random access occasions are respectively X to N+X-1. Optionally, the first random access occasion is a random access occasion triggered by using the second signaling, that is, the second signaling may be the foregoing piece of specific signaling that can be used to trigger the random access occasion. A sending moment of the second signaling is later than a sending moment of the first signaling.

Optionally, unless otherwise specified, "a number of a random access occasion" in embodiments of this application is an absolute number of the random access occasion in the N random access occasions.

Optionally, each piece of specific signaling in the N pieces of specific signaling sent by the second communication apparatus may carry information to indicate a number of a random access occasion triggered by using the piece of specific signaling. For example, the first signaling may include second information, the second information indicates a number of a second random access occasion, and the second random access occasion may be the random access occasion triggered by using the first signaling. The number of the second random access occasion is less than the number of the first random access occasion. For example, the number of the second random access occasion is 0.

Certainly, the 1st piece of specific signaling in the N pieces of specific signaling may not carry information indicating the number of the random access occasion. In other words, the first signaling may not carry the second information. In this case, it may be considered by default that a number of a random access occasion triggered by using the 1st piece of specific signaling is 0, or it may be considered that a number of a random access occasion triggered by using the 1st piece of specific signaling may be indicated by the 1st piece of specific signaling as 0.

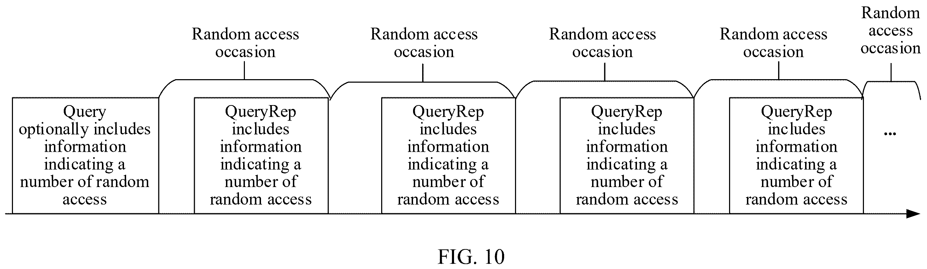

For example, N is equal to 5, and the piece of specific signaling is a Query command and a QueryRep command. As shown in FIG. 10, the QueryRep command may carry information indicating a number of a random access occasion. The Query command may carry or may not carry the information indicating the number of the random access occasion.

Optionally, implementation of the second signaling may be the same as or similar to the implementation of the QueryRep command. For details, refer to the related description of the QueryRep command. Details are not described herein again. The second signaling may also be referred to as QueryRep signaling. A name of the second signaling is not specifically limited in this application.

Optionally, the second communication apparatus may not send the first signaling. In this scenario, the quantity N of random access occasions may be a predefined value. Alternatively, a function of the first signaling and a function of the second signaling may be implemented by using one piece of signaling. For example, the function of the first signaling is implemented by using the second signaling.

S803: The first communication apparatus determines, based on first information, whether to initiate random access or RRC connection establishment on the first random access occasion.

Optionally, when the first communication apparatus determines to initiate random access on the first random access occasion, the first communication apparatus may initiate random access on the first random access occasion. For example, the first communication apparatus may send a message, for example, a random number, a random access request message, an RRC connection establishment request, a preamble, or an orthogonal code to the second communication apparatus on the first random access occasion, to perform random access. If the second communication apparatus successfully receives the message, for example, the random number, the random access request message, the RRC connection establishment request, the preamble, or the orthogonal code, the second communication apparatus may reply a random access response or an RRC connection establishment message to the first communication apparatus. Subsequently, the first communication apparatus and the second communication apparatus may further perform data transmission on the first random access occasion.

Optionally, a plurality of first communication apparatuses may select and determine to initiate random access on the first random access occasion. In this case, all the first communication apparatuses may determine, according to a preset rule, a sequence in which the first communication apparatuses initiate random access on the first random access occasion.

For example, the second communication apparatus may divide the plurality of first communication apparatuses into a plurality of user groups based on information, for example, identifiers of the first communication apparatuses, and the plurality of first communication apparatuses may determine, based on user groups in which the plurality of first communication apparatuses are, a sequence in which the plurality of first communication apparatuses initiate random access occasions on the first random access occasion. For example, a first communication apparatus in a user group 1 may first initiate random access on the first random access occasion. After random access succeeds, the second communication apparatus may send signaling to trigger a first communication apparatus in a next user group (for example, a user group 2) to initiate random access on the first random access occasion, and by analogy.

Alternatively, for example, the plurality of first communication apparatuses may determine, based on random numbers generated by the plurality of first communication apparatuses, a sequence in which the plurality of first communication apparatuses initiate random access occasions on the first random access occasion. For example, a first communication apparatus whose generated random number is within a first value range may first initiate random access on the first random access occasion. After random access succeeds, the second communication apparatus may send signaling to trigger a first communication apparatus whose generated random number is within a second value range to initiate random access on the first random access occasion, and by analogy. Alternatively, a first communication apparatus whose generated random number is a first value may first initiate random access on the first random access occasion, and a first communication apparatus whose generated random number is a second value subsequently initiates random access on the first random access occasion, and by analogy.

Based on this solution, a probability that a collision occurs when the plurality of first communication apparatuses initiate random access on the first random access occasion can be reduced, and random access performance can be improved.

Optionally, when the first communication apparatus determines not to initiate random access on the first random access occasion, if the first random access occasion is before the random access occasion of the first communication apparatus, the first communication apparatus continues to receive specific signaling, and performs a solution similar to step S803. If the first random access occasion is after the random access occasion of the first communication apparatus, the first communication apparatus determines not to toggle the state of the first inventoried flag bit.

Optionally, the random access occasion of the first communication apparatus is one of the N random access occasions. The random access occasion of the first communication apparatus may be understood as a random access occasion selected by the first communication apparatus, or a random access occasion configured or specified by the second communication apparatus for the first communication apparatus, or a random access occasion used by the first communication apparatus to perform random access.

Optionally, that the first communication apparatus determines to initiate random access on the first random access occasion may also be understood as that the first communication apparatus determines that the first random access occasion is the random access occasion of the first communication apparatus. That the first communication apparatus determines not to initiate random access on the first random access occasion may also be understood as that the first communication apparatus determines that the first random access occasion is not the random access occasion of the first communication apparatus.

Optionally, if the first random access occasion is after the random access occasion of the first communication apparatus, it indicates that the first communication apparatus fails to receive specific signaling that is used to trigger a random access occasion #A. The random access occasion #A is the random access occasion of the first communication apparatus. In this scenario, the first communication apparatus does not toggle the state of the first inventoried flag bit, so that when the second communication apparatus subsequently triggers a communication apparatus whose state of the first inventoried flag bit is the first state to perform access, the first communication apparatus can still perform access, thereby avoiding omission of the first communication apparatus.

Based on this solution, the second communication apparatus includes the information indicating the number of the random access occasion in the signaling sent by the second communication apparatus, so that the first communication apparatus can determine the number of the current random access occasion, to determine whether the current random access occasion is the random access occasion of the first communication apparatus, and further initiate random access on the random access occasion of the first communication apparatus, thereby avoiding initiating random access on another random access occasion, reducing a probability of an access conflict with another communication apparatus, and improving access efficiency.

The foregoing describes an overall procedure of the communication method provided in this application. The following describes detailed implementation of related steps in the method.

For the foregoing step S802:

In a first possible implementation, the first information is P-bit information, or a size of the first information is P bits. $2^P \geq N$, where P is a positive integer.

Optionally, when the numbers of the N random access occasions are respectively 0 to N-1, the number of the first random access occasion is a value (or a number) of the P-bit information. For example, P is equal to 2. When the P-bit information is "01", it indicates that the number of the first random access occasion is 1; or when the P-bit information is "10", it indicates that the number of the first random access occasion is 2.

Optionally, when the numbers of the N random access occasions are respectively 1 to N, the number of the first random access occasion is a value of the P-bit information plus 1. For example, P is equal to 2. When the P-bit information is "01", it indicates that the number of the first random access occasion is 2; or when the P-bit information is "10", it indicates that the number of the first random access occasion is 3.

Based on the first possible implementation, the number of the random access occasion may be directly indicated by using the value of the P-bit information, so that complexity of calculating the number of the random access occasion by the first communication apparatus is reduced.

In a second possible implementation, the first information is M-bit information, or a size of the first information is M bits. $2^M < N$, where M is a positive integer.

Optionally, because $2^M < N$, the numbers of the N random access occasions cannot be indicated by using only a value of the M-bit information. In this case, the numbers of the N random access occasions may be indicated by using the value of the M-bit information and a quantity of rounds. The quantity of rounds may be understood as a quantity of use rounds of the value of the M-bit information. The value of the M-bit information may be understood as a relative number of the random access occasion in a round.

The value of the M-bit information is an integer. When the numbers of the N random access occasions are respectively 0 to N-1, and the first signaling can be used to trigger the random access occasion, the number counter of the first random access occasion may have the following two cases:

Case 1: The value of the M-bit information is greater than or equal to 0, and is less than or equal to $2^M$ - 1, and when the quantity of rounds starts from 1 for counting (or numbering), the number counter of the first random access occasion satisfies:

$$counter = (K - 1) \times 2^M + x + 1$$

K is the quantity of rounds, K is a positive integer, and x is the value of the M-bit information.

Case 2: The value of the M-bit information is greater than or equal to 0, and is less than or equal to $2^M$ - 1, and when the quantity of rounds starts from 0 for counting (or numbering), the number counter of the first random access occasion satisfies:

$$counter = K \times 2^M + x + 1$$

K is the quantity of rounds, K is an integer greater than or equal to 0, and $x$ is the value of the M-bit information.

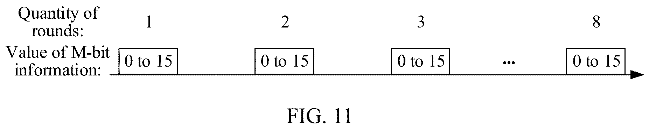

For example, N is equal to 128, the numbers of the N random access occasions are respectively 0 to 127, and M is equal to 4. As shown in FIG. 11, the value of the M-bit information is 0 to 15, and the numbers of the N random access occasions may be indicated by repeatedly using values of eight rounds of the M-bit information. When the quantity of rounds starts from 1 for counting (or numbering), a relationship between the quantity of rounds, the value of the M-bit information, and the number of the random access occasion is shown in the following Table 1. When the quantity of rounds starts from 0 for counting (or numbering), a relationship between the quantity of rounds, the value of the M-bit information, and the number of the random access occasion is shown in Table 2.

Table 1

| Quantity of rounds | Value of M-bit information | Number of a random access occasion |
| --- | --- | --- |
| 1 | 0 to 15 | 1 to 16 |
| 2 | 0 to 15 | 17 to 32 |
| 3 | 0 to 15 | 33 to 48 |
| 4 | 0 to 15 | 49 to 64 |
| 5 | 0 to 15 | 65 to 80 |
| 6 | 0 to 15 | 81 to 96 |
| 7 | 0 to 15 | 97 to 112 |
| 8 | 0 to 14 | 113 to 127 |

Table 2

| Quantity of rounds | Value of M-bit information | Number of a random access occasion |
| --- | --- | --- |
| 0 | 0 to 15 | 1 to 16 |
| 1 | 0 to 15 | 17 to 32 |
| 2 | 0 to 15 | 33 to 48 |
| 3 | 0 to 15 | 49 to 64 |
| 4 | 0 to 15 | 65 to 80 |
| 5 | 0 to 15 | 81 to 96 |
| 6 | 0 to 15 | 97 to 112 |
| 7 | 0 to 14 | 113 to 127 |

For example, in the second possible implementation, after receiving the first information, the first communication apparatus may determine the number of the first random access occasion according to the foregoing relationship and based on the first information, to determine whether to initiate random access on the first random access occasion.

Based on the second possible implementation, the numbers of the N random access occasions are indicated by using the value of the M-bit information and the quantity of rounds, so that a quantity of bits required for indicating the numbers of the random access occasions can be reduced, thereby reducing signaling overheads.

Optionally, in the second possible implementation, the quantity of rounds may be represented as Round, and a value of M bits (that is, a relative number) may be represented as SN. Both Round and SN may be binary numbers. In this scenario, the number counter of the random access occasion may be indicated by using [Round, SN]. For example, in Case 2, the number of the random access occasion may be represented as:

$$\text{counter}=[\text{Round, SN}]+1$$

For example, based on the example shown in Table 2, Round may be represented as a 3-bit binary number, and SN may be represented as a 4-bit binary number (that is, M=4). When Round=0 and SN=0, counter=[000 0000]+1=1; and when Round=0 and SN=1, counter=[000 0001]+1=2. By analogy, when Round=0 and SN=15, counter=[000 1111]+1=16; and when Round=1 and SN=0, counter=[001 0000]+1=17. By analogy, when Round=7 and SN=14, counter=[111 1110]+1=127.

In Case 1, assuming that a total quantity of rounds is W, the number of the random access occasion in first W-1 rounds may be represented as:

$$\text{counter}=[\text{Round, SN}]-2^{M}+1$$

In a last round, that is, a W$^{\text{th}}$ round, the number of the random access occasion may be represented as:

$$\text{counter}=[\text{Round, SN}]+1$$

In the W$^{\text{th}}$ round and a (W-1)$^{\text{th}}$ round, binary numbers of x bits corresponding to Round are equal.

For example, based on the example shown in Table 1, Round may be represented as a 3-bit binary number, and SN may be represented as a 4-bit binary number (that is, M=4). When Round=1 and SN=0, counter=[001 0000]-16+1=1. By analogy, when Round=7 and SN=15, counter=[111 1111]-16+1=112. When Round=8 and SN=0, counter=[111 0000]+1=113. By analogy, when Round=8 and SN=14, counter=[111 1110]+1=127.

Optionally, in addition to the foregoing indication manner of the counter, the counter may also be represented as counter=[Round, SN]. The first communication apparatus may determine a value of the counter, or adjust a value of the counter based on an SN indicated by specific signaling.

For example, Round is represented as a 3-bit binary number, and SN may be represented as a 4-bit binary number. If the first communication apparatus receives, for the first time, specific signaling indicating SN=0, the first communication apparatus sets the counter to [000,0000]. If receiving, for the first time, specific signaling indicating SN=1, the first communication apparatus sets the counter to [000,0001]. By analogy, if receiving, for the first time, specific signaling indicating SN=15, the first communication apparatus sets the counter to [000,1111]. If receiving the signaling indicating SN=0 after receiving, for the first time, the specific signaling indicating SN=15, the first communication apparatus sets the counter to [001,0000]. By analogy, when receiving the signaling indicating SN=0 next time, the first communication apparatus may set the counter to [011,0000].

Optionally, in this representation manner, it may be considered that the first signaling is also the specific signaling, and the numbers of the N random access occasions are respectively 0 to N-1.

Optionally, the first communication apparatus may maintain a first variable and a second variable, where the first variable is a relative number of a random access occasion in each round, and the second variable is a quantity of rounds. Each time the first communication apparatus receives a piece of specific signaling, the first communication apparatus may update a value of the first variable and a value of the second variable based on the M-bit information carried in the specific signaling.

For example, the second signaling is received. The first communication apparatus may update the value of the first variable to the value of the M-bit information carried in the second signaling. In addition, when the value of the M-bit information is less than or equal to a second value, a value of K (that is, the value of the second variable) is equal to a third value plus 1; or when the value of the M-bit information is greater than a second value, a value of K is equal to a third value. The second value is a latest relative number before the second signaling is received. The third value is a latest quantity of rounds before the second signaling is received.

Optionally, when the quantity of rounds is represented as Round, and the value of the M bits (that is, a relative number) is represented as SN, the foregoing updating on the first variable and updating on the second variable may also be represented as the following process:

```
if SN ≤ SN (latest):
 SN = SN, Round = Round (latest) + 1;
else:
 SN = SN, Round = Round (latest)
```

SN (latest) indicates the latest relative number before the second signaling is received. Round (latest) refers to the latest quantity of rounds before the second signaling is received.

It should be noted that, in this embodiment, that the SN is used to represent the relative number and the Round is used to represent the quantity of rounds is an example. Certainly, the relative number or the quantity of rounds may also be represented by using another symbol or form. In addition, the quantity of rounds and the relative number may have other names. This is not specifically limited in this application.

For example, signaling B is last signaling received before the second signaling, and the signaling B is specific signaling. It is assumed that a value of M-bit information carried in the signaling B is 5 (that is, a second value is 5), a third value is 1, and the value of the M-bit information carried in the second signaling is 1. It indicates that the first communication apparatus fails to receive specific signaling between the signaling B and the second signaling, and has currently entered a next round of indication. In this case, according to the foregoing rule, the first communication apparatus may update the value of the first variable to 1, update the value of the second variable to 2, and then determine the number of the first random access occasion according to the relationship in Case 1 or Case 2.

Alternatively, it is assumed that a second value is 5, a third value is 1, and the value of the M-bit information carried in the second signaling is 10. It indicates that a next round of indication is not entered currently, and the first communication apparatus fails to receive five pieces of specific signaling in a current round, that is, the first communication apparatus approximately misses five random access occasions. In this case, according to the foregoing rule, the first communication apparatus may update the value of the first variable to 10, keep the value of the second variable unchanged (that is, the value of the second variable is 1), and then determine the number of the first random access occasion according to the relationship in Case 1 or Case 2.

It should be noted that the adjustment rule of the first variable and the second variable is applicable to the following scenario: a quantity of pieces of specific signaling that consecutively fails to be received (or a quantity of consecutively missed random access occasions) by the first communication apparatus is less than or equal to $2^M$. In other words, the first communication apparatus cannot consecutively miss more than $2^M$ pieces of specific signaling. For example, this scenario may be ensured by using a transmission mechanism at a physical layer. The transmission mechanism at the physical layer may be, for example, low bit rate transmission, narrowband transmission, or repeated transmission.

Optionally, in the second possible implementation, the quantity of rounds may be replaced with a quantity of groups of random access. In this case, the second possible implementation may also be understood as that last N-1 random access occasions in the N random access occasions belong to K random access occasion groups. First K-1 random access occasion groups in the K random access occasion groups include $2^M$ random access occasions. It is assumed that the first random access occasion belongs to a random access occasion group k in the K random access occasion groups, the value of the M-bit information may be understood as a number of the first random access occasion in the random access occasion group k.

For example, based on the example shown in FIG. 11, and Table 1 and Table 2, last 127 random access occasions in 128 random access occasions are random access occasions 1 to 127, and a random access occasion 0 is a random access occasion triggered by using the first signaling. Random access occasions 1 to 16 form a random access occasion group, and random access occasions 17 to 32 form a random access occasion group. By analogy, random access occasions 113 to 127 form a random access occasion group.

In the first and second possible implementations, it may be considered that information indicating a number of a random access occasion is carried in each piece of specific signaling in the N pieces of specific signaling. In addition, information indicating a number of a random access occasion may be carried in a part of the N pieces of specific signaling (referred to as first-type specific signaling), and information indicating a number of a random access occasion is not carried in the other part of the pieces of specific signaling (referred to as second-type specific signaling).

For example, the information indicating the number of the random access occasion may be carried in an odd-numbered piece of specific signaling in the N pieces of specific signaling, for example, the information indicating the number of the random access occasion is carried in a $1^{st}$, $3^{rd}$, $5^{th}$, $7^{th}$, ... piece of specific signaling, or the information indicating the number of the random access occasion may be carried in an even-numbered piece of specific signaling, for example, a signal indicating the number of the random access occasion is carried in a $2^{nd}$, $4^{th}$, $6^{th}$, $8^{th}$, ... piece of specific signaling.

Optionally, the information that indicates the number of the random access occasion and that is carried in the first-type specific signaling may be a value n. For example, values n that indicate the number of the random access occasion and that are carried in the 1st, 3rd, 5th, 7th, ... piece of specific signaling are 0, 1, 2, 3, ..., respectively. A number of a current random access occasion may be determined based on the value n. For example, the number of the current random access occasion is 2n+1.

Further, the number of the random access occasion triggered by using the second-type specific signaling may be determined based on the value n. For example, for the currently received second-type specific signaling, if previous received specific signaling indicates that a number of a random access occasion triggered by using the specific signaling is 2n+1, that is, the previous received specific signaling is the first-type specific signaling, it may be determined that the number of the current random access occasion may be 2n+1+1.

Optionally, the foregoing solution of determining, based on the value n carried in the first-type specific signaling, the number of the random access occasion triggered by using the second-type specific signaling is applicable to a scenario in which no other first-type specific signaling or no other second-type specific signaling exists between the first-type specific signaling previously received by the first communication apparatus and the second-type specific signaling currently received by the first communication apparatus. In other words, the second communication apparatus does not send other first-type specific signaling and other second-type specific signaling between the first-type specific signaling previously received by the first communication apparatus and the second-type specific signaling currently received by the first communication apparatus. For example, if the first-type specific signaling previously received by the first communication apparatus is a 3rd piece of specific signaling in the N pieces of specific signaling, the currently received second-type specific signaling needs to be a 4th piece of specific signaling in the N pieces of specific signaling. If the currently received second-type specific signaling is a 6th specific signaling, that is, a 5th piece of specific signaling fails to be received, the foregoing solution of determining the number of the current random access occasion based on the value n may not be applicable any more.

Based on this possible implementation, the information indicating the number of the random access occasion does not need to be carried in each piece of specific signaling, so that signaling overheads can be reduced. In addition, the first communication apparatus can also adjust and align the numbers of the random access occasions based on information that indicates the number of the random access occasion and that is carried in a part of pieces of specific signaling. In other words, the number of the random access occasion can be determined accurately while signaling overheads are reduced.

For step S803:

In a first possible implementation, when the number of the first random access occasion is equal to a first value, the first communication apparatus determines to initiate random access on the first random access occasion. When the number of the first random access occasion is not equal to a first value, the first communication apparatus determines not to initiate random access on the first random access occasion. The first value indicates a random access occasion of the first communication apparatus. The first value may be a number of the random access occasion of the first communication apparatus.

Optionally, the first value may be selected by the first communication apparatus. For example, after receiving the first signaling, the first communication apparatus may select a random number from 0 to N-1 as the first value. Alternatively, the first value may be configured by the second communication apparatus. For example, before step S802, the second communication apparatus may further send signaling to the first communication apparatus to configure or indicate the first value. In this case, it may be considered that the second communication apparatus may specify, for the first communication apparatus, a random access occasion for initiating random access. Alternatively, the first value may be preconfigured or predefined. For example, the first value may be preconfigured or predefined when the first communication apparatus is delivered. A manner of determining the first value is not specifically limited in this application.

Based on the first possible implementation, the first communication apparatus may determine, by comparing the number of the first random access occasion with the first value, whether to initiate random access on the first random access occasion. Compared with a manner of maintaining a counter, this manner can reduce implementation complexity, thereby reducing design complexity of the first communication apparatus.

In a second possible implementation, the first communication apparatus determines a current value of the counter based on the first information, and when the current value of the counter is 0, the first communication apparatus determines to initiate random access on the first random access occasion. When the current value of the counter is not 0, the first communication apparatus determines not to initiate random access on the first random access occasion.

Optionally, an initial value of the counter is a first value. For the first value, refer to the related description in the first possible implementation. Details are not described herein again. After the first signaling, each time receiving specific signaling, the first communication apparatus may determine the current value of the counter based on information that indicates a number of a random access occasion and that is carried in the specific signaling, a latest value of the counter before the specific signaling is received, and a number of a random access occasion triggered by using specific signaling latest received before the specific signaling.

For example, a latest value of the counter before the second signaling is received is a, a number of a random access occasion triggered by using specific signaling latest received before the second signaling is b, and a number of a first random access occasion indicated by the first information is c. The current value *a'* of the counter satisfies:

$$a' = a - (c - b)$$

For example, based on the example shown in FIG. 10, the initial value of the counter is 4, and the first communication apparatus does not correctly receive a QueryRep #2 and correctly receives a QueryRep #1 and a QueryRep #3. It is assumed that the second signaling is the QueryRep #3. In this case, the latest value of the counter before the second signaling is received is 3 (the value of the counter is decreased by 1 after the QueryRep #1 is received), and the specific signaling latest received before the second signaling is the QueryRep #1. If a number of a random access occasion triggered by using the QueryRep #1 is 1, and a number of a random access occasion triggered by using the QueryRep #3 is 3, after the second signaling is received, the current value of the counter is:

$$a' = a - (c - b) = 3 - (3 - 1) = 1$$

In a third possible implementation, the first communication apparatus determines a current value of the counter based on the first information, and when the current value of the counter is a first value, the first communication apparatus determines to initiate random access on the first random access occasion. When the current value of the counter is not a first value, the first communication apparatus determines not to initiate random access on the first random access occasion. For the first value, refer to the related description in the first possible implementation. Details are not described herein again.

Optionally, an initial value of the counter is 0. After the first signaling, each time receiving specific signaling, the first communication apparatus may determine the current value of the counter based on information that indicates a number of a random access occasion and that is carried in the specific signaling, a latest value of the counter before the specific signaling is received, and a number of a random access occasion triggered by using specific signaling latest received before the specific signaling.

For example, a latest value of the counter before the second signaling is received is d, a number of a random access occasion triggered by using specific signaling latest received before the second signaling is b, and a number of a first random access occasion indicated by the first information is c. The current value d' of the counter satisfies:

$$d' = d + (c - b)$$

For example, based on the example shown in FIG. 10, the first value is 4, and the first communication apparatus does not correctly receive a QueryRep #2 and correctly receives a QueryRep #1 and a QueryRep #3. It is assumed that the second signaling is the QueryRep #3. In this case, the latest value of the counter before the second signaling is received is 1 (the value of the counter is increased by 1 after the QueryRep #1 is received), and the specific signaling latest received before the second signaling is the QueryRep #1. If a number of a random access occasion triggered by using the QueryRep #1 is 1, and a number of a random access occasion triggered by using the QueryRep #3 is 3, after the second signaling is received, the current value of the counter is:

$$d' = d + (c - b) = 1 + (3 - 1) = 3$$

Based on the second or third possible implementation, the first communication apparatus may adjust the value of the counter based on the information that indicates the number of the random access occasion and that is carried in the specific signaling, to improve counting accuracy, thereby improving accuracy of determining the random access occasion of the first communication apparatus, avoiding an access conflict with another communication apparatus caused by initiating random access on another random access occasion, and improving access efficiency.

Optionally, the second communication apparatus may send indication information before step S802. The indication information may indicate whether the specific signaling (for example, the second signaling) that can be used to trigger the random access occasion carries the information indicating the number of the random access occasion. If the indication information indicates that the specific signaling carries the information indicating the number of the random access occasion, the first communication apparatus performs the method in the embodiment shown in FIG. 8 of this application. If the indication information indicates that the specific signaling does not carry the information indicating the number of the random access occasion, the first communication apparatus may perform counting based on the received specific signaling. For a manner of performing counting based on the received specific signaling, refer to the related description in the procedure shown in FIG. 3. Details are not described herein again.

Alternatively, after receiving the specific signaling, the first communication apparatus may determine whether the specific signaling carries the information indicating the number of the random access occasion. If it is determined that the specific signaling carries the information indicating the number of the random access occasion, the first communication apparatus performs the method in the embodiment shown in FIG. 8 of this application. If it is determined that the specific signaling does not carry the information indicating the number of the random access occasion, the first communication apparatus may perform counting based on the received specific signaling.

In addition to the access conflict, a conflict may further occur during data transmission of the plurality of first communication apparatuses. For example, if the plurality of first communication apparatuses select a same random access occasion to initiate random access, and the plurality of first communication apparatuses simultaneously send a same random number, the second communication apparatus may correctly decode the random number, and send an acknowledgment message carrying the random number, but the second communication apparatus cannot identify that the random number is sent by the plurality of first communication apparatuses. After receiving the acknowledgment message, the plurality of first communication apparatuses that send the random number on the same random access occasion all consider that the plurality of first communication apparatuses have normally accessed, and therefore all send uplink data (for example, an EPC). In other words, the plurality of first communication apparatuses may simultaneously send the uplink data. However, the uplink data of the plurality of first communication apparatuses may be different. In this case, a conflict occurs during data transmission.

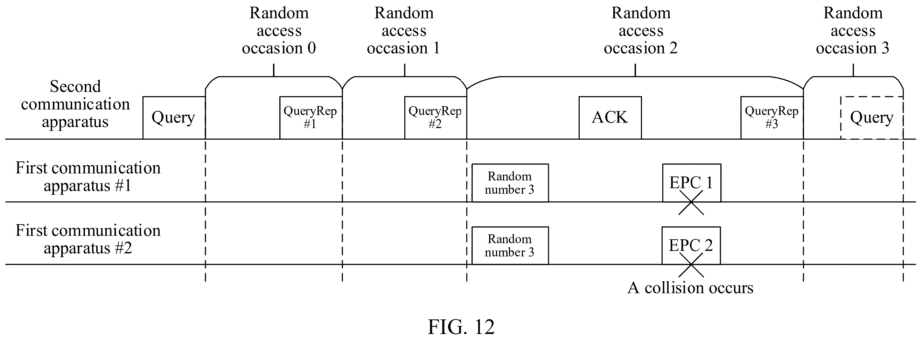

For example, as shown in FIG. 12, both a first communication apparatus #1 and a first communication apparatus #2 select a random access occasion 2, and both the first communication apparatus #1 and the first communication apparatus #2 send a random number 3 in the random access occasion 2. The first communication apparatus #1 and the first communication apparatus #2 may perform normal access on the random access occasion 2. However, a conflict occurs when the first communication apparatus #1 and the first communication apparatus #2 send respective EPCs in the random access occasion 2.

Based on this, this application further provides a communication method. When a data collision occurs, a second communication apparatus can indicate a first communication apparatus not to toggle a flag bit, so that the first communication apparatus can still have an occasion to initiate random access in a subsequent inventory cycle, to send data to the second communication apparatus, thereby avoiding omission of a part of first communication apparatuses in an inventory process.

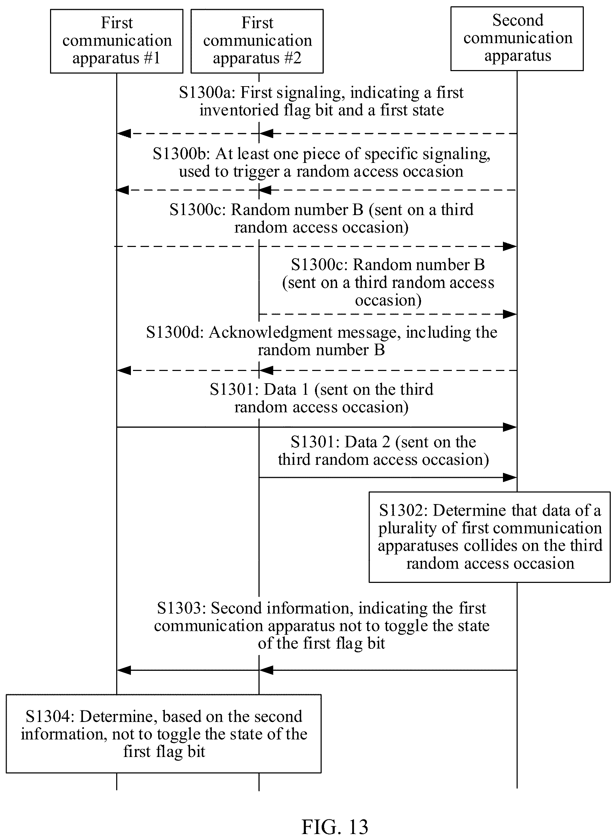

FIG. 13 is a schematic flowchart of the communication method according to an embodiment of this application. The method is described by using an example in which a data conflict occurs between a first communication apparatus #1 and a first communication apparatus #2. The communication method includes the following steps.

S1301: The first communication apparatus #1 sends data 1 to a second communication apparatus on a third random access occasion. The first communication apparatus #2 sends data 2 to the second communication apparatus on the third random access occasion.

The third random access occasion is a random access occasion of the first communication apparatus #1 and the first communication apparatus #2. For description of the random access occasion, refer to the description of the random access occasion in the method shown in FIG. 8. Details are not described herein again.

For example, the data 1 may be an EPC of the first communication apparatus #1, and the data 2 may be an EPC of the first communication apparatus #2. Certainly, the data 1 and the data 2 may alternatively be other uplink data. This is not specifically limited in this application.

Optionally, before step S1301, the communication method may further include the following steps.

S1300a: The second communication apparatus sends first signaling. Correspondingly, the first communication apparatus #1 and the first communication apparatus #2 receive the first signaling from the second communication apparatus.

The first signaling indicates a first inventoried flag bit and a first state of the first inventoried flag bit, and the first inventoried flag bit is a flag bit of the second communication apparatus in a current round of inventory. The first signaling may further indicate a quantity N of random access occasions. The first signaling may be further used to trigger a random access occasion. For description of the first signaling, refer to the related description of the first signaling in the method shown in FIG. 8. Details are not described herein again.

Optionally, after receiving the first signaling, the first communication apparatus #1 and the first communication apparatus #2 may determine respective random access occasions. This embodiment is described by using an example in which both the random access occasion of the first communication apparatus #1 and the random access occasion of the first communication apparatus #2 are the third random access occasion.

S1300b: The second communication apparatus sends at least one piece of specific signaling. For description of the specific signaling, refer to the related description of the specific signaling in the method shown in FIG. 8. Details are not described herein again.

Optionally, implementation of the specific signaling may be similar to the implementation of the second signaling, that is, information indicating a number of a random access occasion may be carried in the specific signaling. For details, refer to the related description of the second signaling in the method shown in FIG. 8. Details are not described herein again.

Optionally, the first communication apparatus #1 and the first communication apparatus #2 may determine, in the manner in step S803, whether the random access occasion triggered by using the specific signaling is the third random access occasion. After it is determined that a random access occasion triggered by using the specific signaling is the third random access occasion, the following step S1300c is performed.

S1300c: The first communication apparatus #1 sends a random number B or a random access request message or an RRC connection establishment request message to the second communication apparatus on the third random access occasion, and the first communication apparatus #2 sends a random number B or a random access request message or an RRC connection establishment request message to the second communication apparatus on the third random access occasion. Correspondingly, the second communication apparatus receives the random number B or the random access request message or the RRC connection establishment request message on the third random access occasion. For example, the random access request message or the RRC connection establishment request message may include the random number B.

The random access request message sent by the first communication apparatus #1 and the random access request message sent by the first communication apparatus #2 on the third random access occasion include same content, or the RRC connection establishment request message sent by the first communication apparatus #1 and the RRC connection establishment request message sent by the first communication apparatus #2 on the third random access occasion include same content. For step S1300c, refer to the related description of step S303. Details are not described herein again. In addition, in step S1300c, the second communication apparatus does not perceive that the random number B or the random access request message or the RRC connection establishment request message is from a plurality of first communication apparatuses. In other words, the second communication apparatus cannot identify that the random number B is simultaneously sent by the plurality of first communication apparatuses.

S1300d: The second communication apparatus sends an acknowledgment message. Correspondingly, the first communication apparatus #1 and the first communication apparatus #2 receive the acknowledgment message.

The acknowledgment message includes the random number B. After receiving the acknowledgment message, the first communication apparatus #1 and the first communication apparatus #2 learn of that the random number carried in the acknowledgment message is the random number sent by the first communication apparatus #1 and the first communication apparatus #2, to perform step S1301.

Optionally, the acknowledgment message may also be referred to as a conflict resolution message or a contention resolution message, and the three may be replaced with each other. This is not specifically limited in this application. Alternatively, the acknowledgment message may also be referred to as an RRC connection establishment message.

S1302: The second communication apparatus determines that data of the plurality of first communication apparatuses collides on the third random access occasion.

Optionally, when the second communication apparatus cannot correctly decode the data received on the third random access occasion, the second communication apparatus determines that the data of the plurality of first communication apparatuses collides on the third random access occasion.

S1303: The second communication apparatus sends second information to the plurality of first communication apparatuses. Correspondingly, the first communication apparatus #1 and the first communication apparatus #2 receive the second information.

The second information indicates the first communication apparatus not to toggle the state of the first inventoried flag bit. For example, the second information may include the random number B. The random number B may be used to indicate a target first communication apparatus. The target first communication apparatus is the first communication apparatus that sends the random number B, that is, the first communication apparatus #1 and the first communication apparatus #2. That the second information indicate the first communication apparatus not to toggle the state of the first inventoried flag bit is that the second information indicates the target first communication apparatus not to toggle the state of the first inventoried flag bit.

Optionally, that the second information indicates the first communication apparatus not to toggle the state of the first inventoried flag bit may be alternatively replaced with that the second information indicates that the first communication apparatus fails to transmit data; or that the second information indicates that the first communication apparatus fails to access, where the access herein may include a data transmission process; or that the second information indicates that a collision or a conflict occurs during data transmission of the first communication apparatus.

Optionally, the data transmission failure, the access failure, and the collision during data transmission may be respectively understood as a data transmission failure, an access failure, or a collision during data transmission in a current round. The current round may be an inventory cycle triggered by using the first signaling.

Optionally, the second information may be carried in a newly defined signaling message. Alternatively, the second information may be carried in existing signaling. For example, the second information may be a field in a QueryRep command or another existing command, or the second information may be a field in an RRC connection reject message or an RRC connection release message.

This embodiment is described by using an example in which a collision occurs during data transmission of the plurality of first communication apparatuses. If the second communication apparatus does not detect a collision during data transmission on a random access occasion, the second communication apparatus may also send third information, to indicate the first communication apparatus that initiates random access on the random access occasion to toggle the state of the inventoried flag bit, or indicate that access or data transmission of the first communication apparatus succeeds.

S1304: The first communication apparatus #1 and the first communication apparatus #2 determine, based on the second information, not to toggle the state of the first inventoried flag bit.

Optionally, determining not to toggle the state of the first inventoried flag bit may be understood or replaced with: determining that access in a current round fails, or determining that data fails to be transmitted, or determining that a data collision or conflict occurs with another first communication apparatus on the third random access occasion.

Optionally, based on the second information, after receiving specific signaling that is used to trigger a next random access occasion, the first communication apparatus #1 and the first communication apparatus #2 may not toggle the state of the first inventoried flag bit, that is, keep the state of the first inventoried flag bit as the first state. For example, the next random access occasion may be a $1^{st}$ random access occasion after the third random access occasion. Subsequently, when the second communication apparatus performs a next round of inventory on the first communication apparatus whose state of the first inventoried flag bit state is the first state or triggers the first communication apparatus to preform access, the first communication apparatus #1 and the first communication apparatus #2 may initiate random access. In other words, the first communication apparatus that receives the second information needs to perform access again. For example, the first communication apparatus performs access when the second communication apparatus triggers a next round of random access, or the first communication apparatus actively initiates access again.

Based on this solution, when determining that a data collision occurs on a random access occasion, the second communication apparatus may indicate a plurality of first communication apparatuses that collide not to toggle inventoried flag bits in a current round of inventory, so that the plurality of first communication apparatuses can still have occasions to initiate random access in a subsequent inventory cycle, to send data to the second communication apparatus, thereby avoiding omission of a part of first communication apparatuses, and improving communication efficiency.

It may be understood that, according to the procedure shown in FIG. 3, when a data collision occurs, if the second communication apparatus does not send the second information, the plurality of first communication apparatuses toggle the state of the first inventoried flag bit. As a result, the plurality of first communication apparatuses do not initiate random access again in a subsequent inventory cycle, and consequently the plurality of first communication apparatuses that collide are omitted.

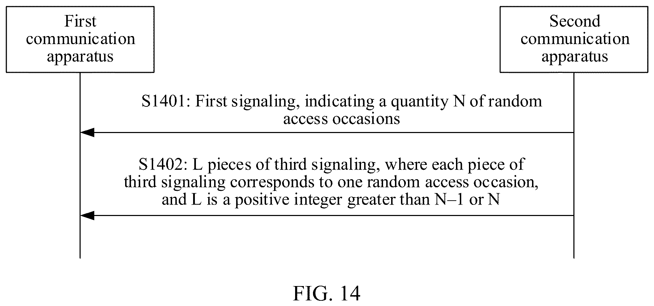

In addition to the communication methods shown in FIG. 8 and FIG. 13, this application further provides a communication method. The method is applicable to a scenario in which a part of first communication apparatuses cannot correctly receive each piece of specific signaling after coverage is enhanced. As shown in FIG. 14, the communication method includes the following steps.

S1401: A second communication apparatus sends first signaling. Correspondingly, the first communication apparatus receives the first signaling from the second communication apparatus.

The first signaling indicates a quantity N of random access occasions. Further, the first signaling further indicates a first inventoried flag bit and a first state of the first inventoried flag bit. The first signaling may be further used to trigger a random access occasion. For description of the first signaling, refer to the related description of the first signaling in the method shown in FIG. 8. Details are not described herein again.

S1402: The second communication apparatus sends L pieces of third signaling. Each piece of third signaling corresponds to one random access occasion. L is a positive integer greater than N-1 or greater than N.

That the third signaling corresponds to the random access occasion may be understood as that the third signaling is used to trigger the random access occasion, or the random access occasion is triggered by using the third signaling. That is, the third signaling is the specific signaling in the method shown in FIG. 8. For details, refer to the related description of the specific signaling in the method shown in FIG. 8. Details are not described herein again.

Optionally, when the first signaling is used to trigger the random access occasion, L may be a positive integer greater than N-1. When the first signaling is not used to trigger the random access occasion, that is, only the third signaling is used to trigger the random access occasion, L may be a positive integer greater than N.

Optionally, when a plurality of random access occasions are jointly triggered by using the first signaling and the L pieces of third signaling, a sum of quantities of random access occasions triggered by using the first signaling and the L pieces of third signaling may be greater than N, that is, more than N random access occasions are triggered by using the first signaling and the L pieces of third signaling.

In other words, although the second communication apparatus indicates, by using the first signaling, that the quantity of random access occasions is N, the second communication apparatus triggers more than N random access occasions by using the first signaling and/or the L pieces of third signaling. In other words, an actual quantity of random access occasions is greater than the quantity N of random access occasions indicated by the first signaling.

In a possible implementation, after receiving the first signaling, the first communication apparatus may select a random number from [0, N-1] as an initial value of a counter. Each time one piece of specific signaling is received subsequently, the value of the counter may be decreased by 1 until the value of the counter is 0, and random access is initiated. According to an existing procedure, if the second communication apparatus triggers N random access occasions, a first communication apparatus that selects a larger random number may fail to receive a part of pieces of specific signaling, and therefore the counter cannot be decreased to 0, and random access cannot be initiated.

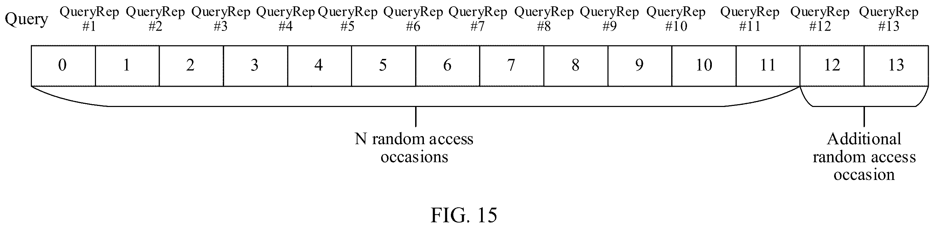

For example, as shown in FIG. 15, the specific signaling is Query and QueryRep. It is assumed that the quantity N of random access occasions indicated by the first signaling is equal to 12, a random number selected by a first communication apparatus is 10, and the first communication apparatus fails to receive a QueryRep #4 and a QueryRep #5. In this case, after the first communication apparatus receives QueryRep #11, the value of the counter can only be decreased to 1. According to an existing procedure, the second communication apparatus does not send the QueryRep signaling to trigger a random access occasion. Therefore, the first communication apparatus cannot initiate random access.

Based on the solution of this embodiment, after the QueryRep #11, the second communication apparatus may further send at least one piece of specific signaling. After receiving the additionally sent piece of specific signaling, the first communication apparatus may reduce the value of the counter to 0, to initiate random access. FIG. 15 is described by using an example in which the second communication apparatus further sends two QueryReps.

In another possible implementation, after receiving the first signaling, the first communication apparatus may select a random number from [0, N-1] as a fourth value, and set an initial value of the counter to 0. Each time one piece of specific signaling is received subsequently, the value of the counter may be increased by 1 until the value of the counter is the fourth value, and random access is initiated. According to an existing procedure, if the second communication apparatus triggers N random access occasions, a first communication apparatus that selects a larger random number may fail to receive a part of pieces of specific signaling, and therefore the value of the counter cannot reach the fourth value, and random access cannot be initiated.

Based on the solution of this embodiment, the second communication apparatus may additionally send at least one piece of specific signaling, so that the first communication apparatus can add the value of the counter to the fourth value based on the additionally sent piece of specific signaling, to initiate random access on a random access occasion triggered by using the specific signaling.

In a possible implementation, a value of L may be determined based on channel quality. The channel quality may be quality of a channel between the second communication apparatus and a target first communication apparatus. The target first communication apparatus may be a first communication apparatus that is in a coverage area of the second communication apparatus and that is farthest from the second communication apparatus.

Optionally, the channel quality between the second communication apparatus and the target first communication apparatus may be obtained by the second communication apparatus through measurement, or may be measured by the target first communication apparatus and reported to the second communication apparatus. This is not specifically limited in this application.

For example, the channel quality may be represented by using a channel bit error rate, that is, the value of L may be determined based on the channel bit error rate. For example, the value of L may satisfy the following relationship:

$$L = \lceil (1+y) \times N \rceil \qquad (1.1)$$

or

$$L = \lfloor (1+y) \times N \rfloor \qquad (1.2)$$

y indicates the channel bit error rate. ⌈ ⌉ indicates rounding up. ⌊ ⌋ indicates rounding down. Certainly, the foregoing relationship may also be transformed to obtain the value of L. For example, a positive integer is added to left of an equal sign of the foregoing relationship, that is, $L = \lceil (1+y) \times N \rceil + Q$, where Q is a positive integer.

Alternatively, the value of L may satisfy the following relationship:

$$L = \lceil (1+y) \times N \rceil - 1 \qquad (2.1)$$

or

$$L = \lfloor (1 + y) \times N \rfloor - 1 \qquad (2.2)$$

For example, the foregoing relationships (1.1) and (1.2) may be applied to a scenario in which the first signaling is used to trigger a random access occasion, or may be applied to a scenario in which the first signaling is not used to trigger a random access occasion. The foregoing relationships (2.1) and (2.2) may be applied to a scenario in which the first signaling is used to trigger a random access occasion.

In another possible implementation, a value of L may be determined by the second communication apparatus, or may be predefined in a protocol. This is not specifically limited in this application.

Based on this solution, the second communication apparatus sends the L pieces of third signaling, so that the quantity of actually triggered random access occasions is greater than the quantity N of random access occasions indicated by the first signaling, to provide the random access occasion for the first communication apparatus that fails to receive a part of the pieces of third signaling. In other words, even if the first communication apparatus fails to receive a part of the pieces of specific signaling, there is still an occasion to obtain random access subsequently, especially for the first communication apparatus that selects the large random number or selects the later random access occasion, so that the first communication apparatus can initiate random access as much as possible, thereby improving random access efficiency.

It may be understood that, in the foregoing embodiments, the methods and/or steps implemented by the first communication apparatus may also be implemented by a component (for example, a processor, a chip, a chip system, a circuit, a logic module, or software) that can be used in the first communication apparatus. The methods and/or steps implemented by the second communication apparatus may alternatively be implemented by a component (for example, a processor, a chip, a chip system, a circuit, a logic module, or software) that can be used in the second communication apparatus. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

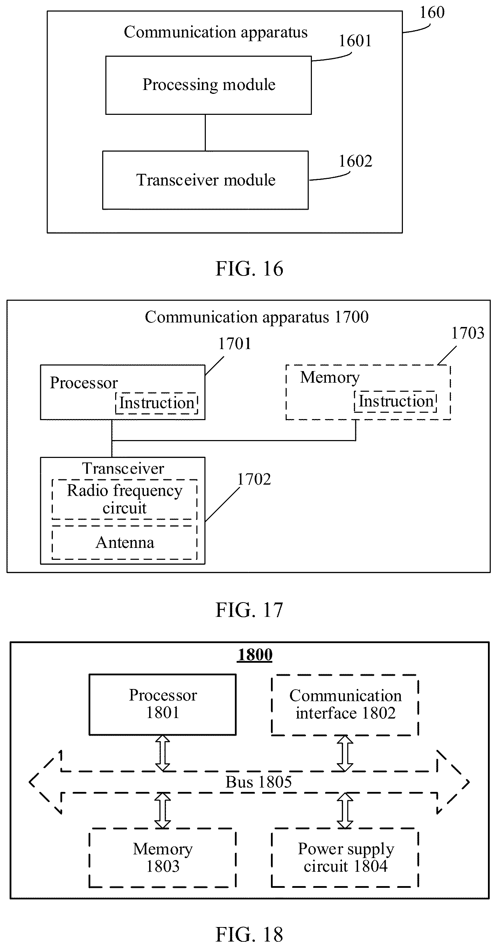

FIG. 16 is a diagram of a structure of a communication apparatus 160. The communication apparatus 160 includes a processing module 1601 and a transceiver module 1602. The communication apparatus 160 may be configured to implement a function of the first communication apparatus or a function of the second communication apparatus.

In some embodiments, the communication apparatus 160 may further include a storage module (not shown in FIG. 16), configured to store program instructions and data.

In some embodiments, the transceiver module 1602 may also be referred to as a transceiver unit, and is configured to implement a sending function and/or a receiving function. The transceiver module 1602 may include a transceiver circuit, a transceiver machine, a transceiver, or a communication interface.

In some embodiments, the transceiver module 1602 may include a receiving module and a sending module, respectively configured to perform receiving and sending steps performed by the first communication apparatus or the second communication apparatus in the foregoing method embodiments, and/or configured to support another process of the technology described in this specification. The processing module 1601 may be configured to perform a processing (for example, determining) step performed by the first communication apparatus or the second communication apparatus in the foregoing method embodiments, and/or configured to support another process of the technology described in this specification.

In some embodiments, when the communication apparatus 160 is configured to implement a function of the first communication apparatus,

the transceiver module 1602 is configured to receive first signaling, where the first signaling indicates a quantity N of random access occasions, and N is a positive integer; the transceiver module 1602 is further configured to receive second signaling, where the second signaling includes first information, the first information indicates a number of a first random access occasion, and the number of the first random access occasion is less than or equal to N-1; and the processing module 1601 is configured to determine, based on the first information, whether to initiate random access on the first random access occasion.

Optionally, that the processing module 1601 is configured to determine, based on the first information, whether to initiate random access on the first random access occasion includes: The processing module 1601 is configured to: when the number of the first random access occasion is equal to a first value, determine to initiate random access on the first random access occasion; or when the number of the first random access occasion is not equal to a first value, determine not to initiate random access on the first random access occasion.

In some other embodiments, when the communication apparatus 160 is configured to implement a function of the first communication apparatus,

the transceiver module 1602 is configured to send data to a second communication apparatus on a third random access occasion; the transceiver module 1602 is further configured to receive second information from the second communication apparatus, where the second information indicates the first communication apparatus not to toggle a state of a first inventoried flag bit, and the first inventoried flag bit is an inventoried flag bit of the second communication apparatus in a current round of inventory; and the processing module 1601 is configured to determine, based on the second information, not to toggle the state of the first inventoried flag bit.

In some embodiments, when the communication apparatus 160 is configured to implement a function of the second communication apparatus,

the transceiver module 1602 is configured to send first signaling, where the first signaling indicates a quantity N of random access occasions, and N is a positive integer; and the transceiver module 1602 is further configured to send second signaling, where the second signaling includes first information, the first information indicates a number of a first random access occasion, and the number of the first random access occasion is less than or equal to N-1.

In some other embodiments, when the communication apparatus 160 is configured to implement a function of the second communication apparatus,

the processing module 1601 is configured to determine that data of a plurality of first communication apparatuses collides on a third random access occasion; and the transceiver module 1602 is configured to send second information to the plurality of first communication apparatuses, where the second information indicates the first communication apparatus not to toggle a state of a first inventoried flag bit, and the first inventoried flag bit is an inventoried flag bit of the second communication apparatus in a current round of inventory.

Optionally, that the processing module 1601 is configured to determine that the data of the plurality of first communication apparatuses collides on the third random access occasion includes: The processing module 1601 is configured to determine not to be capable of correctly decoding the data received on the third random access occasion.

In still other embodiments, when the communication apparatus 160 is configured to implement a function of the second communication apparatus,

the transceiver module 1602 is configured to send first signaling, where the first signaling indicates a quantity N of random access occasions, and N is a positive integer; and the transceiver module 1602 is further configured to send L pieces of third signaling, where each piece of third signaling corresponds to one random access occasion, and L is a positive integer greater than N.

All related content of the steps in the foregoing method embodiments may be cited in function descriptions of the corresponding functional modules. Details are not described herein again.

Optionally, in this application, that the transceiver module receives/sends information may also be understood as that the processing module receives/sends information via the transceiver module. That the processing module receives/sends information via the transceiver module may also be understood as that the processing module controls the transceiver module to receive/send information. Alternatively, that the processing module sends information through the transceiver module may be understood as that the processing module outputs information to the transceiver module, and the transceiver module sends the information; and that the processing module receives information through the transceiver module may be understood as that the transceiver module receives information and inputs the information to the processing module.

In this application, the communication apparatus 160 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another device that can provide the foregoing functions.

In some embodiments, when the communication apparatus 160 in FIG. 16 is a chip or a chip system, a function/an implementation process of the transceiver module 1602 may be implemented through an input/output interface (or a communication interface) of the chip or the chip system, and a function/an implementation process of the processing module 1601 may be implemented by a processor (or a processing circuit) of the chip or the chip system.

The communication apparatus 160 provided in this embodiment may perform the foregoing methods. Therefore, for technical effects that can be achieved by the communication apparatus, refer to the foregoing method embodiments. Details are not described herein again.

In a possible product form, the second communication apparatus or the first communication apparatus in embodiments of this application may be further implemented through the following: one or more field programmable gate arrays (field programmable gate arrays, FPGAs), programmable logic devices (programmable logic devices, PLDs), controllers, state machines, gate logic, discrete hardware components, any other suitable circuit, or any combination of circuits capable of performing various functions described throughout this application.

In another possible product form, the second communication apparatus or the first communication apparatus in embodiments of this application may be implemented by using a general bus architecture. For ease of description, FIG. 17 is a diagram of a structure of a communication apparatus 1700 according to an embodiment of this application. The communication apparatus 1700 includes a processor 1701 and a transceiver 1702. The communication apparatus 1700 may be a first communication apparatus, or a chip or a chip system in a first communication apparatus. Alternatively, the communication apparatus 1700 may be a second communication apparatus, or a chip or a module in a second communication apparatus. FIG. 17 shows only main components in the communication apparatus 1700. In addition to the processor 1701 and the transceiver 1702, the communication apparatus 1700 may further include a memory 1703 and an input/output apparatus (which is not shown in the figure).

Optionally, the processor 1701 is mainly configured to process a communication protocol and communication data, control the entire communication apparatus, execute a software program, and process data of the software program. The memory 1703 is mainly configured to store the software program and the data. The transceiver 1702 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1701, the transceiver 1702, and the memory 1703 may be connected through a communication bus.

After the communication apparatus is powered on, the processor 1701 may read the software program in the memory 1703, interpret and execute instructions of the software program, and process the data of the software program. When data needs to be sent wirelessly, the processor 1701 performs baseband processing on the to-be-sent data, and then outputs a baseband signal to a radio frequency circuit. The radio frequency circuit performs radio frequency processing on the baseband signal, and then sends a radio frequency signal to the outside in a form of electromagnetic wave through the antenna. When data is to be sent to the communication apparatus, the radio frequency circuit receives a radio frequency signal through the antenna, converts the radio frequency signal into a baseband signal, and outputs the baseband signal to the processor 1701. The processor 1701 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 160 may be in a form of the communication apparatus 1700 shown in FIG. 17.

In an example, functions/implementation processes of the processing module 1601 in FIG. 16 may be implemented by the processor 1701 in the communication apparatus 1700 shown in FIG. 17 by invoking the computer-executable instructions stored in the memory 1703. Functions/implementation processes of the transceiver module 1602 in FIG. 16 may be implemented by the transceiver 1702 in the communication apparatus 1700 shown in FIG. 17.

In still another possible product form, the first communication apparatus or the second communication apparatus in this application may use a composition structure shown in FIG. 18, or include components shown in FIG. 18. FIG. 18 is a diagram of composition of a communication apparatus 1800 according to this application.

As shown in FIG. 18, the communication apparatus 1800 includes at least one processor 1801. Optionally, the communication apparatus further includes a communication interface 1802.

When related program instructions are executed in the at least one processor 1801, the apparatus 1800 may be enabled to implement the method provided in any one of the foregoing embodiments and any possible design thereof. Alternatively, the processor 1801 is configured to implement, by using a logic circuit or executing code instructions, the method provided in any one of the foregoing embodiments and any possible design thereof.

The communication interface 1802 may be configured to receive the program instructions and transmit the program instructions to the processor. Alternatively, the communication interface 1802 may be configured to perform communication interaction between the communication apparatus 1800 and another communication device, for example, exchange control signaling and/or service data. For example, the communication interface 1802 may be configured to receive a signal from an apparatus other than the communication apparatus 1800, and transmit the signal to the processor 1801, or send a signal from the processor 1801 to a communication apparatus other than the communication apparatus 1800.

Optionally, the communication interface 1802 may be code and/or a data read/write interface circuit, or the communication interface 1802 may be a signal transmission interface circuit between a communication processor and a transceiver, or may be a pin of a chip.

Optionally, the communication apparatus 1800 may further include at least one memory 1803, and the memory 1803 may be configured to store the related program instructions and/or data that are/is required. It should be noted that the memory 1803 may be independent of the processor 1801, or may be integrated into the processor 1801. The memory 1803 may be located inside the communication apparatus 1800, or may be located outside the communication apparatus 1800. This is not limited.

Optionally, the communication apparatus 1800 may further include a power supply circuit 1804, and the power supply circuit 1804 may be configured to supply power to the processor 1801. The power supply circuit 1804 may be located in a same chip as the processor 1801, or may be located in a chip other than a chip in which the processor 1801 is located.

Optionally, the communication apparatus 1800 may further include a bus 1805, and parts of the communication apparatus 1800 may be interconnected through the bus 1805.

In some embodiments, in hardware implementation, a person skilled in the art may figure out that the communication apparatus 160 shown in FIG. 16 may be in a form of the communication apparatus 1800 shown in FIG. 18.

In an example, functions/implementation processes of the processing module 1601 in FIG. 16 may be implemented by the processor 1801 in the communication apparatus 1800 shown in FIG. 18 by invoking the computer-executable instructions stored in the memory 1803. Functions/implementation processes of the transceiver module 1602 in FIG. 16 may be implemented through the communication interface 1802 in the communication apparatus 1800 shown in FIG. 18.

It should be noted that the structure shown in FIG. 18 does not constitute a specific limitation on the first communication apparatus or the second communication apparatus. For example, in some other embodiments of this application, the first communication apparatus or the second communication apparatus may include more or fewer components than those shown in the figure, some components may be combined, some components may be split, or the components may be differently arranged. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in embodiments of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another device) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may be physically separated or not, this is, may be located together in the same place or distributed on a plurality of network units. Components displayed as units may be or may be not physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims of this application and their equivalent technologies.

**Claims**

1. A communication method, wherein the method comprises:

   receiving first signaling, wherein the first signaling indicates a quantity N of random access occasions, and N is a positive integer;
   receiving second signaling, wherein the second signaling comprises first information, the first information indicates a number of a first random access occasion, and the number of the first random access occasion is less than or equal to N-1; and
   determining, based on the first information, whether to initiate random access on the first random access occasion.

2. The method according to claim 1, wherein determining, based on the first information, whether to initiate random access on the first random access occasion comprises:

   when the number of the first random access occasion is equal to a first value, determining to initiate random access on the first random access occasion; or
   when the number of the first random access occasion is not equal to a first value, determining not to initiate random access on the first random access occasion.

3. The method according to claim 1 or 2, wherein the first information is P-bit information, $2^P \geq N$, and P is a positive integer.

4. The method according to claim 1 or 2, wherein the first information is M-bit information, $2^M < N$, and M is a positive integer.

5. The method according to claim 4, wherein a value of the M-bit information is greater than or equal to 0 and less than or equal to $2^M - 1$, the value of the M-bit information is an integer, and the number counter of the first random access occasion satisfies:

$$counter = (K - 1) \times 2^M + x + 1,$$

   wherein
   K is a quantity of rounds, K is a positive integer, and $x$ is the value of the M-bit information.

6. The method according to claim 5, wherein when the value of the M-bit information is less than or equal to a second value, a value of K is equal to a third value plus 1; or

   when the value of the M-bit information is greater than a second value, a value of K is equal to a third value, wherein
   the second value is a latest relative number before the second signaling is received, and the third value is a latest quantity of rounds before the second signaling is received.

7. A communication method, wherein the method comprises:

   sending first signaling, wherein the first signaling indicates a quantity N of random access occasions, and N is a positive integer; and
   sending second signaling, wherein the second signaling comprises first information, the first information indicates a number of a first random access occasion, and the number of the first random access occasion is less than or equal to N-1.

8. The method according to claim 7, wherein the first information is P-bit information, $2^P \geq N$, and P is a positive integer.

9. The method according to claim 7, wherein the first information is M-bit information, $2^M < N$, and M is a positive integer.

10. The method according to claim 9, wherein a value of the M-bit information is greater than or equal to 0 and less than or equal to $2^M - 1$, the value of the M-bit information is an integer, and the number counter of the first random access occasion satisfies:

$$counter = (K - 1) \times 2^M + x + 1,$$

wherein
K is a quantity of rounds, K is a positive integer, and x is the value of the M-bit information.

11. The method according to any one of claims 7 to 10, wherein the first signaling further comprises second information, the second information indicates a number of a second random access occasion, and the number of the second random access occasion is smaller than the number of the first random access occasion.

12. A communication method, wherein the method comprises:

   sending data to a second communication apparatus on a third random access occasion;
   receiving second information from the second communication apparatus, wherein the second information indicates the first communication apparatus not to toggle a state of a first inventoried flag bit, and the first inventoried flag bit is an inventoried flag bit of the second communication apparatus in a current round of inventory; and
   determining, based on the second information, not to toggle the state of the first inventoried flag bit.

13. The method according to claim 12, wherein that the second information indicates the first communication apparatus not to toggle the state of the first inventoried flag bit comprises at least one of the following:

   the second information indicates that the first communication apparatus fails to transmit data;
   the second information indicates that the first communication apparatus fails to access; and
   the second information indicates that a collision occurs during data transmission of the first communication apparatus.

14. A communication method, wherein the method comprises:

   determining that data of a plurality of first communication apparatuses collides on a third random access occasion; and
   sending second information to the plurality of first communication apparatuses, wherein the second information indicates the first communication apparatus not to toggle a state of a first inventoried flag bit, and the first inventoried flag bit is an inventoried flag bit of a second communication apparatus in a current round of inventory.

15. The method according to claim 14, wherein that the second information indicates the first communication apparatus not to toggle the state of the first inventoried flag bit comprises at least one of the following:

   the second information indicates that the first communication apparatus fails to transmit data;
   the second information indicates that the first communication apparatus fails to access; and
   the second information indicates that a collision occurs during data transmission of the first communication apparatus.

16. The method according to claim 14 or 15, wherein determining that the data of the plurality of first communication apparatuses collides on the third random access occasion comprises: not being capable of correctly decoding the data received on the third random access occasion.

17. A communication method, wherein the method comprises:

   sending first signaling, wherein the first signaling indicates a quantity N of random access occasions, and N is a positive integer; and
   sending L pieces of third signaling, wherein each piece of third signaling corresponds to one random access occasion, and L is a positive integer greater than N.

18. The method according to claim 17, wherein a value of L is determined based on a channel bit error rate between a target first communication apparatus and a second communication apparatus.

**19.** The method according to claim 18, wherein the value of L satisfies the following relationship:

$$L = \lceil (1 + y) \times N \rceil,$$

wherein
y indicates the channel bit error rate, and $\lceil \ \rceil$ indicates rounding up.

**20.** A communication apparatus, wherein the communication apparatus comprises a processor, and the processor is configured to run a computer program or instructions, to enable the communication apparatus to perform the method according to any one of claims 1 to 19.

**21.** A computer-readable storage medium, wherein the computer-readable storage medium stores computer instructions or a program, and when the computer instructions or the program is run on a communication apparatus, the method according to any one of claims 1 to 19 is performed.

**22.** A computer program product, wherein the computer program product comprises computer instructions, and when a part or all of the computer instructions are run on a communication apparatus, the method according to any one of claims 1 to 19 is performed.

**23.** A chip, comprising:

a memory, configured to store computer program instructions; and
a processor, configured to execute the computer program instructions, so that a communication apparatus comprising the chip performs the method according to any one of claims 1 to 19.

Carrier sent by the reader    Carrier reflected by the tag

Reader

Antenna

Tag

FIG. 1

Receiver (receiver)

Fronthaul
downlink

Fronthaul uplink

Reverse link

Forward link

Helper (helper)

Tag

FIG. 2

Tag

Tag

Reader

S301: Paging message

S302: Trigger random access

S303: Random number A

S304: ACK message

S305: EPC

S306: Read/Write

S307: Response

Single tag procedure

Trigger a next slot

Flag bit toggling

Random access

FIG. 3

Inventory cycle 1

| | | Slot 0 | | Slot 1 | Slot 2 | Slot 3 |
|---|---|---|---|---|---|---|
| Reader | Select | Query | ACK | QueryRep #1 | QueryRep #2 | QueryRep #3 | Query |

Tag 1: An initial value of a selected counter is 0 — Random number — EPC

Tag 2: An initial value of a selected counter is 2 — Random number 1

Tag 3: An initial value of a selected counter is 1 — Random number 2

FIG. 4

FIG. 5

(a)

(b)

(c)

FIG. 6

—— Data connection    - - - - Carrier or energy

Base        First communication       Base
station 1          apparatus         station 2
(a)

Base        First communication       Base
station 1          apparatus         station 2
(b)

Base        First communication       Base
station 1          apparatus         station 2
(c)

Base        First communication       Base
station 1          apparatus         station 2
(d)

FIG. 7

| First communication apparatus | | Second communication apparatus |
| --- | --- | --- |

S801: First signaling, indicating a quantity N of random access occasions

S802: Second signaling, including first information, indicating a number of a first random access occasion, where the number of the first random access occasion is less than or equal to N−1

S803: Determine, based on the first information, whether to initiate random access on the first random access occasion

FIG. 8

FIG. 9

| | Random access occasion | Random access occasion | Random access occasion | Random access occasion | Random access occasion |
|---|---|---|---|---|---|
| Query optionally includes information indicating a number of random access | QueryRep includes information indicating a number of random access | QueryRep includes information indicating a number of random access | QueryRep includes information indicating a number of random access | QueryRep includes information indicating a number of random access | ... |

FIG. 10

EP 4 709 019 A1

Quantity of
rounds:          1              2              3              8

Value of M-bit  | 0 to 15 |    | 0 to 15 |    | 0 to 15 |   ...  | 0 to 15 |
information:

FIG. 11

39

FIG. 12

| First communication apparatus #1 | First communication apparatus #2 | Second communication apparatus |
|---|---|---|

S1300a: First signaling, indicating a first inventoried flag bit and a first state

S1300b: At least one piece of specific signaling, used to trigger a random access occasion

S1300c: Random number B (sent on a third random access occasion)

S1300c: Random number B (sent on a third random access occasion)

S1300d: Acknowledgment message, including the random number B

S1301: Data 1 (sent on the third random access occasion)

S1301: Data 2 (sent on the third random access occasion)

S1302: Determine that data of a plurality of first communication apparatuses collides on the third random access occasion

S1303: Second information, indicating the first communication apparatus not to toggle the state of the first flag bit

S1304: Determine, based on the second information, not to toggle the state of the first flag bit

FIG. 13

```
┌──────────────────┐                                              ┌──────────────────┐
│      First       │                                              │      Second      │
│  communication   │                                              │  communication   │
│    apparatus     │                                              │    apparatus     │
└──────────────────┘                                              └──────────────────┘
```

S1401: First signaling, indicating a quantity N of random
access occasions

S1402: L pieces of third signaling, where each piece of
third signaling corresponds to one random access occasion,
and L is a positive integer greater than N–1 or N

FIG. 14

Query | QueryRep #1 | QueryRep #2 | QueryRep #3 | QueryRep #4 | QueryRep #5 | QueryRep #6 | QueryRep #7 | QueryRep #8 | QueryRep #9 | QueryRep #10 | QueryRep #11 | QueryRep #12 | QueryRep #13

0 | 1 | 2 | 3 | 4 | 5 | 6 | 7 | 8 | 9 | 10 | 11 | 12 | 13

N random access occasions

Additional random access occasion

FIG. 15

Communication apparatus 160

Processing module 1601

Transceiver module 1602

FIG. 16

Communication apparatus 1700

Processor 1701

Instruction

Memory 1703

Instruction

Transceiver

Radio frequency circuit

Antenna

1702

FIG. 17

**1800**

Processor 1801

Communication interface 1802

Bus 1805

Memory 1803

Power supply circuit 1804

FIG. 18

## INTERNATIONAL SEARCH REPORT

| International application No. |
|---|
| **PCT/CN2024/091252** |

### A. CLASSIFICATION OF SUBJECT MATTER

H04W74/08(2024.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI, 3GPP: 射频识别, 阅读器, 读取器, 读写器, 标签, 机会, 时机, 时隙, 数量, 数目, 查询, 询问, 编号, 序号, 索引, 盘存, 清点, 标志, 标识, 翻转, 置反, 修改, RFID, reader, tag, label, occasion, slot, number, query, sequence, index, inventory, flag, reverse, change, modify

### C. DOCUMENTS CONSIDERED TO BE RELEVANT

| Category* | Citation of document, with indication, where appropriate, of the relevant passages | Relevant to claim No. |
|---|---|---|
| X | CN 102823222 A (FRANCE TELECOM S.A.) 12 December 2012 (2012-12-12) description, paragraphs [0008]-[0014], [0080]-[0099], [0111]-[0114] and [0123]-[0126] | 1-11, 17-23 |
| X | JP 2010087738 A (PANASONIC CORP.) 15 April 2010 (2010-04-15) description, paragraphs [0014]-[0053] and [0067]-[0083] | 12-23 |
| X | CN 101944171 A (UNIVERSITY OF ELECTRONIC SCIENCE AND TECHNOLOGY OF CHINA) 12 January 2011 (2011-01-12) description, paragraphs [0007], [0010]-[0013] and [0023]-[0035] | 1-11, 20-23 |
| X | CN 102013002 A (NATIONAL UNIVERSITY OF DEFENSE TECHNOLOGY OF PLA) 13 April 2011 (2011-04-13) description, paragraphs [0008]-[0015] and [0019]-0037] | 12-16, 20-23 |
| A | CN 114386440 A (HANGZHOU CHIPJET TECHNOLOGY CO., LTD.) 22 April 2022 (2022-04-22) entire document | 1-23 |
| A | CN 104268493 A (NORTHEAST NORMAL UNIVERSITY) 07 January 2015 (2015-01-07) entire document | 1-23 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 June 2024** | **02 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/091252**

| Patent document cited in search report | | | Publication date (day/month/year) | Patent family member(s) | | | Publication date (day/month/year) |
|---|---|---|---|---|---|---|---|
| CN | 102823222 | A | 12 December 2012 | KR | 20130026423 | A | 13 March 2013 |
| | | | | KR | 101799389 | B1 | 20 November 2017 |
| | | | | US | 2013043982 | A1 | 21 February 2013 |
| | | | | US | 9332430 | B2 | 03 May 2016 |
| | | | | JP | 2013518496 | A | 20 May 2013 |
| | | | | JP | 5818816 | B2 | 18 November 2015 |
| | | | | EP | 2532140 | A1 | 12 December 2012 |
| | | | | EP | 2532140 | B1 | 10 May 2017 |
| | | | | WO | 2011092426 | A1 | 04 August 2011 |
| | | | | KR | 20130026423 | A | 13 March 2013 |
| | | | | KR | 101799389 | B1 | 20 November 2017 |
| | | | | US | 2013043982 | A1 | 21 February 2013 |
| | | | | US | 9332430 | B2 | 03 May 2016 |
| | | | | JP | 2013518496 | A | 20 May 2013 |
| | | | | JP | 5818816 | B2 | 18 November 2015 |
| | | | | EP | 2532140 | A1 | 12 December 2012 |
| | | | | EP | 2532140 | B1 | 10 May 2017 |
| | | | | WO | 2011092426 | A1 | 04 August 2011 |
| JP | 2010087738 | A | 15 April 2010 | JP | 5151871 | B2 | 27 February 2013 |
| CN | 101944171 | A | 12 January 2011 | CN | 101944171 | B | 13 February 2013 |
| CN | 102013002 | A | 13 April 2011 | CN | 102013002 | B | 11 January 2012 |
| CN | 114386440 | A | 22 April 2022 | None | | | |
| CN | 104268493 | A | 07 January 2015 | None | | | |

Form PCT/ISA/210 (patent family annex) (July 2022)

**EP 4 709 019 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310613884